(19) Europäisches Patentamt
European Patent Office
Office européen des brevets

(11) EP 0 761 768 B1

(12) EUROPÄISCHE PATENTSCHRIFT

(45) Veröffentlichungstag und Bekanntmachung des Hinweises auf die Patenterteilung:
**14.11.2001 Patentblatt 2001/46**

(51) Int Cl.[7]: **C09B 62/04**, C09B 62/503

(21) Anmeldenummer: **96810545.2**

(22) Anmeldetag: **15.08.1996**

# (54) Reaktivfarbstoffe, Verfahren zu deren Herstellung und deren Verwendung

Reactive dyes, process for their preparation and the use thereof

Colorants réactifs, procédé pour leur préparation et leur utilisation

(84) Benannte Vertragsstaaten:
**BE CH DE ES FR GB IT LI PT**

(30) Priorität: **24.08.1995 CH 242195**

(43) Veröffentlichungstag der Anmeldung:
**12.03.1997 Patentblatt 1997/11**

(73) Patentinhaber: **Ciba Specialty Chemicals Holding Inc.**
**4057 Basel (CH)**

(72) Erfinder:
- **Tzikas, Athanassios, Dr.**
  **4133 Pratteln (CH)**
- **Aeschlimann, Peter**
  **4123 Allschwil (CH)**

(56) Entgegenhaltungen:
**EP-A- 0 458 743**
**EP-A- 0 503 385**
**EP-A- 0 625 549**

EP 0 761 768 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft neue Reaktivfarbstoffe, Verfahren zu deren Herstellung und deren Verwendung zum Färben oder Bedrucken von Fasermaterialien.

Die Praxis des Färbens mit Reaktivfarbstoffen hat in neuerer Zeit zu erhöhten Anforderungen an die Qualität der Färbungen und die Wirtschaftlichkeit des Färbeprozesses geführt. Infolge dessen besteht weiterhin ein Bedarf nach neuen Reaktivfarbstoffen, welche verbesserte Eigenschaften, insbesondere in bezug auf die Applikation, aufweisen.

Für das Färben werden heute Reaktivfarbstoffe gefordert, die eine ausreichende Substantivität haben und die zugleich eine gute Auswaschbarkeit der nicht fixierten Anteile aufweisen. Sie sollen ferner eine gute färberische Ausbeute aufweisen und hohe Reaktivität besitzen, wobei insbesondere Färbungen mit hohen Fixiergraden geliefert werden sollen. Von den bekannten Farbstoffen werden diese Anforderungen nicht in allen Eigenschaften erfüllt.

Der vorliegenden Erfindung liegt daher die Aufgabe zugrunde, neue, verbesserte Reaktivfarbstoffe für das Färben und Bedrucken von Fasermaterialien zu finden, welche die oben charakterisierten Qualitäten in hohem Masse besitzen. Die neuen Farbstoffe sollten sich vor allem durch hohe Fixierausbeuten und hohe Faser-Farbstoff-Bindungsstabilitäten auszeichnen, und ausserdem sollten die nicht auf der Faser fixierten Anteile leicht auswaschbar sein. Sie sollten ferner Färbungen mit guten Allgemeinechtheiten, beispielsweise Licht- und Nassechtheiten, ergeben.

Es hat sich gezeigt, dass mit den weiter unten definierten Reaktivfarbstoffen die gestellte Aufgabe weitgehend gelöst wird.

Gegenstand der Erfindung sind daher Reaktivfarbstoffe der Formel

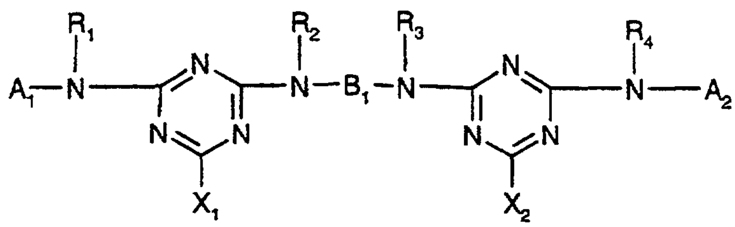

(1),

worin

$R_1$, $R_2$, $R_3$ und $R_4$ unabhängig voneinander Wasserstoff oder gegebenenfalls durch Hydroxy, Sulfo, Sulfato, Cyano oder Carboxy substituiertes $C_1$-$C_4$-Alkyl,

$X_1$ und $X_2$ Halogen sind,

$B_1$ ein aromatisches oder aliphatisches Brückenglied ist oder der Rest der Formel $-N(R_2)-B_1-N(R_3)-$ einen Piperazinrest darstellt,

$A_1$ der Rest eines Monoazo-, Polyazo-, Metallkomplexazo-, Anthrachinon-, Phthalocyanin-, Formazan- oder Dioxazin-Chromophors und

$A_2$ ein Rest der Formel

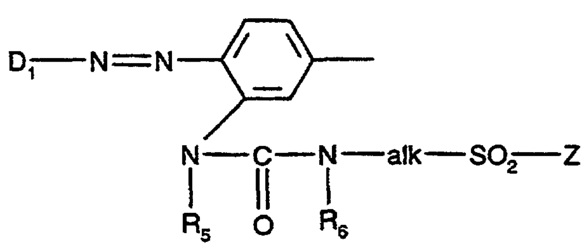

(2) ist,

wobei

$D_1$ gegebenenfalls durch $C_1$-$C_4$-Alkyl, $C_1$-$C_4$-Alkoxy, $C_2$-$C_4$-Alkanoylamino, Sulfo, Halogen, Carboxy oder einen faserreaktiven Rest substituiertes Phenyl oder Naphthyl ist,

$R_5$ und $R_6$ unabhängig voneinander Wasserstoff oder gegebenenfalls durch Hydroxy, Sulfo, Sulfato, Cyano oder Carboxy substituiertes $C_1$-$C_4$-Alkyl sind, alk $C_2$-$C_6$-Alkylen und

Z Vinyl oder einen Rest $-CH_2-CH_2-U_1$ bedeutet und $U_1$ eine Abgangsgruppe ist, und die Reste $A_1$ und $A_2$ voneinander verschiedene Bedeutungen haben.

Die EP-A-0 503 385 offenbart symmetrische Farbstoffe der Formel (1), in denen der Rest $A_1$ die gleiche Bedeutung wie der Rest $A_2$ hat.

Die Reste $R_1$, $R_2$, $R_3$, $R_4$, $R_5$ und $R_6$ im Reaktivfarbstoff der Formel (1) sind als Alkylreste geradkettig oder verzweigt. Die Alkylreste können weitersubstituiert sein, durch Hydroxy, Sulfo, Sulfato, Cyano oder Carboxy. Als Beispiele seien die folgenden Reste genannt Methyl, Aethyl, Propyl, Isopropyl, Butyl, Isobutyl, sek.-Butyl oder tert.-Butyl, sowie die entsprechenden durch Hydroxy, Sulfo, Sulfato, Cyano oder Carboxy substituierten Reste. Als Substituenten sind Hydroxy, Sulfo oder Sulfato, insbesondere Hydroxy oder Sulfato und vorzugsweise Hydroxy bevorzugt.

Bevorzugt sind $R_1$, $R_4$, $R_5$ und $R_6$ Wasserstoff oder $C_1$-$C_4$-Alkyl, insbesondere Wasserstoff.

$R_2$ und $R_3$ sind bevorzugt unabhängig voneinander Wasserstoff oder unsubstituiertes oder durch Hydroxy, Sulfo, Sulfato, Cyano oder Carboxy substituiertes $C_1$-$C_4$-Alkyl. Gemäss einer interessanten Ausführungsform bedeutet hierbei einer der Reste $R_2$ und $R_3$durch Hydroxy, Sulfo, Sulfato, Cyano oder Carboxy substituiertes $C_1$-$C_4$-Alkyl, und der andere der Reste $R_2$ und $R_3$ Wasserstoff oder $C_1$-$C_4$-Alkyl, insbesondere Wasserstoff.

Besonders bevorzugt sind $R_2$ und $R_3$ unabhängig voneinander Wasserstoff oder $C_1$-$C_4$-Alkyl, insbesondere Wasserstoff.

$X_1$ und $X_2$ sind vorzugsweise unabhängig voneinander Chlor oder Fluor, insbesondere Fluor.

Der Alkylenrest alk enthält keine weiteren Substituenten und bedeutet insbesondere einen $C_2$-$C_3$-Alkylenrest, wie z.B. Aethylen oder 1,3-Propylen.

Bei der Abgangsgruppe $U_1$ handelt es sich z.B. um -Cl, -Br, -F, $-OSO_3H$, $-SSO_3H$, $-OCO-CH_3$, $-OPO_3H_2$, $-OCO-C_6H_5$, $-OSO_2-C_1-C_4$-Alkyl oder $-OSO_2-N(C_1-C_4\text{-Alkyl})_2$. Bevorzugt ist $U_1$ eine Gruppe der Formel -Cl, $-OSO_3H$, $-SSO_3H$, $-OCO-CH_3$, $-OCO-C_6H_5$ oder $-OPO_3H_2$, insbesondere -Cl oder $-OSO_3H$ und besonders bevorzugt $-OSO_3H$.

Bevorzugt ist alk ein $C_2$-$C_3$-Alkylenrest und Z Vinyl oder ein Rest der Formel $-CH_2-CH_2-OSO_3H$.

Als aliphatisches Brückenglied ist $B_1$ z.B. ein $C_2$-$C_{12}$-Alkylenrest, insbesondere ein $C_2$-$C_6$-Alkylenrest, welcher durch 1, 2 oder 3 Glieder aus der Gruppe -NH-, $-N(CH_3)-$ oder insbesondere -O- unterbrochen sein kann und unsubstituiert oder durch Hydroxy, Sulfo, Sulfato, Cyano oder Carboxy substituiert ist. Als Substituenten der für $B_1$ genannten Alkylenreste sind Hydroxy, Sulfo oder Sulfato, insbesondere Hydroxy, bevorzugt.

Als aliphatische Brückenglieder kommen für $B_1$ weiterhin z.B. $C_5$-$C_9$-Cycloalkylenreste, wie insbesondere Cyclohexylenreste, in Betracht. Die genannten Cycloalkylenreste können gegebenenfalls durch $C_1$-$C_4$-Alkyl, $C_1$-$C_4$-Alkoxy, $C_2$-$C_4$-Alkanoylamino, Sulfo, Halogen oder Carboxy, insbesondere durch $C_1$-$C_4$-Alkyl, substituiert sein. Als aliphatische Brückenglieder seien für $B_1$ ferner gegebenenfalls im Cyclohexylenring durch $C_1$-$C_4$-Alkyl substituierte Methylen-cydohexylen-methylenreste genannt.

Für den Rest der Formel $-N(R_2)-B_1-N(R_3)-$ kommt als Piperazinrest z.B. ein Rest der Formel

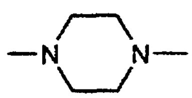

in Betracht.

Als aromatisches Brückenglied ist $B_1$ z.B. gegebenenfalls durch $C_1$-$C_4$-Alkyl, $C_1$-$C_4$-Alkoxy, $C_2$-$C_4$-Alkanoylamino, Sulfo, Halogen oder Carboxy substituiertes $C_1$-$C_6$-Alkylenphenylen oder Phenylen oder ein Rest der Formel

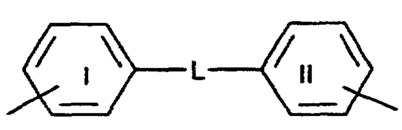

(3),

worin die Benzolringe und II gegebenenfalls durch $C_1$-$C_4$-Alkyl, $C_1$-$C_4$-Alkoxy, $C_2$-$C_4$-Alkanoylamino, Sulfo, Halogen oder Carboxy substituiert sind und L die direkte Bindung oder ein $C_2$-$C_{10}$-Alkylenrest ist, welcher durch 1, 2 oder 3 Sauerstoffatome unterbrochen sein kann, oder L ein Brückenglied der Formel -CH=CH-, -N=N-, -NH-, -CO-, -NH-CO-, -NH-CO-NH-, -O-, -S- oder $-SO_2-$ ist. Als aromatisches Brückenglied ist $B_1$ bevorzugt Phenylen, welches wie oben angegeben substituiert sein kann. Vorzugsweise sind die für $B_1$ genannten aromatischen Brückenglieder unsubstituiert oder duch Sulfo substituiert.

Bevorzugt ist $B_1$ ein $C_2$-$C_{12}$-Alkylenrest, welcher durch 1, 2 oder 3 Glieder aus der Gruppe -NH-, -N($CH_3$)- oder -O- unterbrochen sein kann und unsubstituiert oder durch Hydroxy, Sulfo, Sulfato, Cyano oder Carboxy substituiert ist; oder

ein gegebenenfalls durch $C_1$-$C_4$-Alkyl, $C_1$-$C_4$-Alkoxy, $C_2$-$C_4$-Alkanoylamino, Sulfo, Halogen oder Carboxy substituierter $C_5$-$C_9$-Cycloalkylenrest, $C_1$-$C_6$-Alkylenphenylenrest oder Phenylenrest;
oder $B_1$ ist ein Rest der Formel (3), worin die Benzolringe I und II gegebenenfalls durch $C_1$-$C_4$-Alkyl, $C_1$-$C_4$-Alkoxy, $C_2$-$C_4$-Alkanoylamino, Sulfo, Halogen oder Carboxy substituiert sind und L die direkte Bindung oder ein $C_2$-$C_{10}$-Alkylenrest ist, welcher durch 1, 2 oder 3 Sauerstoffatome unterbrochen sein kann, oder L ein Brückenglied der Formel -CH=CH-,N=N-, -NH-, -CO-, -NH-CO-, -NH-CO-NH-, -O-, -S- oder -$SO_2$- ist;
oder der Rest der Formel -M($R_2$)-$B_1$-N($R_3$)- ist ein Piperazinrest der Formel

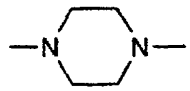 .

Besonders bevorzugt ist $B_1$ ein $C_2$-$C_{12}$-Alkylenrest, welcher durch 1, 2 oder 3 Glieder -O- unterbrochen sein kann und unsubstituiert oder durch Hydroxy, Sulfo, Sulfato, Cyano oder Carboxy substituiert ist, oder ein gegebenenfalls durch $C_1$-$C_4$-Alkyl, $C_1$-$C_4$-Alkoxy, $C_2$-$C_4$-Alkanoylamino, Sulfo, Halogen oder Carboxy substituierter Phenylenrest.

Ganz besonders bevorzugt ist $B_1$ ein $C_2$-$C_{12}$-Alkylenrest, insbesondere ein $C_2$-$C_6$-Alkylenrest, welcher durch 1, 2 oder 3 Glieder -O- unterbrochen sein kann und unsubstituiert oder durch Hydroxy substituiert ist.

Von besonderem Interesse als Brückenglieder $B_1$ sind $C_2$-$C_6$-Alkylenreste, insbesondere solche der Formel -$CH_2$-CH($R_7$)- oder -($R_7$)-CH-$CH_2$-, worin $R_7$ $C_1$-$C_4$-Alkyl, insbesondere Methyl, bedeutet.

Der Rest $A_1$ im Reaktivfarbstoff der Formel (1) kann als Rest eines Monoazo-, Polyazo-, Metallkomplexazo-, Anthrachinon-, Phthalocyanin-, Formazan- oder Dioxazin-Chromophors an seinem Grundgerüst die bei organischen Farbstoffen üblichen Substituenten gebunden enthalten.

Als Beispiele für Substituenten im Rest $A_1$ seien genannt: Alkylgruppen mit 1 bis 4 Kohlenstoffatomen, wie Methyl, Aethyl, Propyl, Isopropyl oder Butyl, wobei die Alkylreste z.B. durch Hydroxyl, Sulfo oder Sulfato weitersubstituiert sein können; Alkoxygruppen mit 1 bis 4 Kohlenstoffatomen, wie Methoxy, Aethoxy, Propoxy, Isopropoxy oder Butoxy, wobei die Alkylreste z.B. durch Hydroxyl, Sulfo oder Sulfato weitersubstituiert sein können; gegebenenfalls durch $C_1$-$C_4$-Alkyl, $C_1$-$C_4$-Alkoxy, Halogen, Carboxy oder Sulfo substituiertes Phenyl; Acylaminogruppen mit 1 bis 8 Kohlenstoffatomen, insbesondere solche Alkanoylaminogruppen, wie z.B. Acetylamino oder Propionylamino; gegebenenfalls im Phenylring durch $C_1$-$C_4$-Alkyl, $C_1$-$C_4$-Alkoxy, Halogen oder Sulfo substituiertes Benzoylamino; gegebenenfalls im Phenylring durch $C_1$-$C_4$-Alkyl, $C_1$-$C_4$-Alkoxy, Halogen oder Sulfo substituiertes Phenylamino; N,N-Di-β-hydroxyäthylamino; N,N-Di-β-sulfatoäthylamino; Sulfobenzylamino; N,N-Disulfobenzylamino; Alkoxycarbonyl mit 1 bis 4 Kohlenstoffatomen im Alkoxyrest, wie Methoxycarbonyl oder Aethoxycarbonyl; Alkylsulfonyl mit 1 bis 4 Kohlenstoffatomen, wie Methylsulfonyl oder Aethylsulfonyl; Trifluormethyl; Nitro; Amino; Cyano; Halogen, wie Fluor, Chlor oder Brom; Carbamoyl; N-Alkylcarbamoyl mit 1 bis 4 Kohlenstoffatomen im Alkylrest, wie N-Methylcarbamoyl oder N-Aethylcarbamoyl; Sulfamoyl; N-Mono- oder N,N-Dialkylsulfamoyl mit jeweils 1 bis 4 Kohlenstoffatomen, wie N-Methylsulfamoyl, N-Aethylsulfamoyl, N-Propylsulfamoyl, N-Isopropylsulfamoyl oder N-Butylsulfamoyl, wobei die Alkylreste z.B. durch Hydroxy oder Sulfo weitersubstituiert sein können; N-(ß-Hydroxyäthyl)-sulfamoyl; N,N-Di-(ß-hydroxyäthyl)-sulfamoyl; gegebenenfalls durch $C_1$-$C_4$-Alkyl, $C_1$-$C_4$-Alkoxy, Halogen, Carboxy oder Sulfo substituiertes N-Phenylsulfamoyl; Ureido; Hydroxy; Carboxy; Sulfomethyl oder Sulfo sowie faserreaktive Reste.

Eine Gruppe von geeigneten faserreaktiven Resten umfasst solche der Formeln

$$-NH-CO-Y \qquad (4),$$

$$-SO_2-Z \qquad (4a),$$

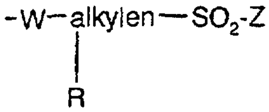

(4b),

$$-W\text{-alkylen}-E-\text{alkylen}'-SO_2\text{-}Z \qquad (4c),$$

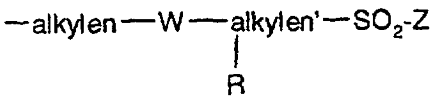

(4d),

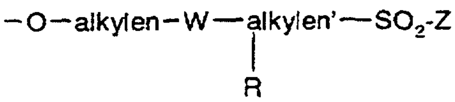

(4e),

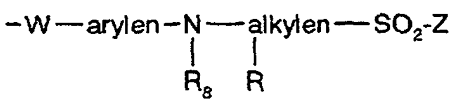

(4f)

und

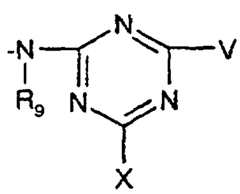

(4g),

worin W eine Gruppe der Formel $-SO_2-NR_8-$, $-CONR_8-$ oder $-NR_8CO-$ ist, $R_8$ Wasserstoff, unsubstituiertes oder durch Hydroxy, Sulfo, Sulfato, Carboxy oder Cyano substituiertes $C_1$-$C_4$-Alkyl oder ein Rest der Formel

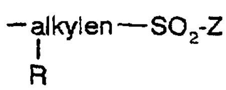

,

R Wasserstoff, Hydroxy, Sulfo, Sulfato, Carboxy, Cyano, Halogen, $C_1$-$C_4$-Alkoxycarbonyl, $C_1$-$C_4$-Alkanoyloxy, Carbamoyl oder die Gruppe $-SO_2-Z$ ist, Z die oben angegebenen Bedeutungen hat, Y ein Rest der Formel $-CH(Hal)-CH_2-Hal$ oder $-C(Hal)=CH_2$ und Hal Halogen bedeutet, E der Rest -O- oder $-NR_{10}$ ist, $R_{10}$ Wasserstoff oder $C_1$-$C_4$-Alkyl, alkylen und alkylen' unabhängig voneinander $C_1$-$C_6$-Alkylen, arylen einen unsubstituierten oder durch Sulfo, Carboxy, $C_1$-$C_4$-Alkyl, $C_1$-$C_4$-Alkoxy oder Halogen substituierten Phenylen- oder Naphthylenrest bedeutet, $R_9$ Wasserstoff oder unsubstituiertes oder durch Carboxy, Cyano, Hydroxy, Sulfo oder Sulfato substituiertes $C_1$-$C_4$-Alkyl und X eine als Anion abspaltbare Gruppe ist und V einen Rest der Formel

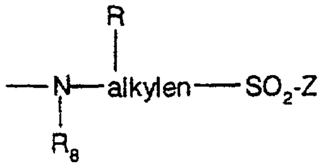

(5a),

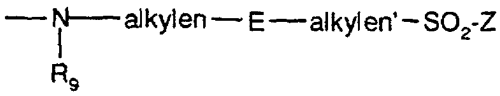

(5b),

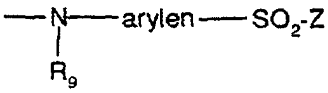

(5c),

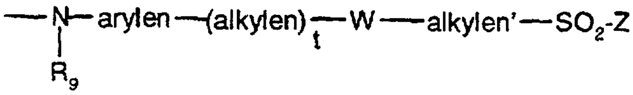

(5d)

oder

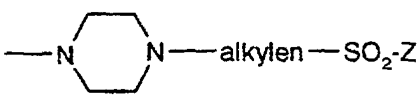

(5e)

bedeutet, worin R, $R_8$, $R_9$, E, W, Z, alkylen, alkylen' und arylen die oben angegebenen Bedeutungen haben und t 0 oder 1 ist.

Bei alkylen und alkylen' handelt es sich unabhängig voneinander z.B. um einen Methylen-, Äthylen-, 1,3-Propylen-, 1,4-Butylen-, 1,5-Pentylen- oder 1,6-Hexylenrest oder deren verzweigte Isomere.

Bevorzugt stehen alkylen und alkylen' für einen $C_1$-$C_4$-Alkylenrest und insbesondere bevorzugt für einen Äthylenrest.

R bedeutet bevorzugt Wasserstoff oder die Gruppe -$SO_2$-Z, wobei für Z die zuvor angegebenen Bedeutungen und Bevorzugungen gelten. Besonders bevorzugt steht R für Wasserstoff.

$R_8$ ist vorzugsweise Wasserstoff, $C_1$-$C_4$-Alkyl oder eine Gruppe -alkylen-$SO_2$-Z, worin alkylen und Z jeweils die zuvor angegebenen Bedeutungen haben. Besonders bevorzugt ist $R_8$ Wasserstoff oder $C_1$-$C_4$-Alkyl, insbesondere Wasserstoff.

$R_9$ ist vorzugsweise Wasserstoff oder ein $C_1$-$C_4$-Alkylrest und insbesondere bevorzugt Wasserstoff.

Arylen ist vorzugsweise ein 1,3- oder 1,4-Phenylenrest, der unsubstituiert oder z.B. durch Sulfo, Methyl, Methoxy oder Carboxy substituiert ist.

E steht vorzugsweise für -NH- und insbesondere bevorzugt für -O-.

W bedeutet bevorzugt eine Gruppe der Formel -NHCO- oder insbesondere -CONH-.

X steht z.B. für Fluor, Chlor, Brom, Sulfo, $C_1$-$C_4$-Alkylsulfonyl oder Phenylsulfonyl und bevorzugt für Fluor oder Chlor.

Hal bedeutet vorzugsweise Chlor oder Brom, insbesondere Brom.

Weitere interessante Reaktivgruppen sind solche der Formel (4g), worin V eine als Anion abspaltbare Gruppe ist oder einen nicht-reaktiven Substituenten bedeutet.

Bedeutet V eine als Anion abspaltbare Gruppe, so handelt es sich hierbei z.B. um Fluor, Chlor, Brom, Sulfo, $C_1$-$C_4$-Alkylsulfonyl oder Phenylsulfonyl und bevorzugt um Fluor oder Chlor.

Steht V für einen nicht-reaktiven Substituenten, so kann dies z.B. ein Hydroxy-, $C_1$-$C_4$-Alkoxy-, $C_1$-$C_4$-Alkylthio-, Amino-, N-$C_1$-$C_4$-Alkylamino- oder N,N,Di-$C_1$-$C_4$-Alkylamino-, wobei das Alkyl gegebenenfalls z.B. durch Sulfo, Sulfato, Hydroxy, Carboxy oder Phenyl substituiert ist, Cyclohexylamino-, Morpholino-, oder N-$C_1$-$C_4$-Alkyl-N-phenylamino- oder Phenylamino- oder Naphthylaminorest, wobei das Phenyl oder Naphthyl gegebenenfalls z.B. durch $C_1$-$C_4$-Alkyl, $C_1$-$C_4$-Alkoxy, Carboxy, Sulfo oder Halogen substituiert ist, sein.

Beispiele für geeignete nicht-reaktive Substituenten V sind Amino, Methylamino, Äthylamino, β-Hydroxyäthylamino, N,N-Di-ß-Hydroxyäthylamino, β-Sulfoäthylamino, Cyclohexylamino, Morpholino, o-, m- oder p-Chlorphenylamino, o-, m- oder p-Methylphenylamino, o-, m- oder p-Methoxyphenylamino, o-, m- oder p-Sulfophenylamino, Disulfophenylamino, o-Carboxyphenylamino, 1- oder 2-Naphthylamino, 1-Sulfo-2-naphthylamino, 4,8-Disulfo-2-naphthylamino, N-Äthyl-N-phenylamino, N-Methyl-N-phenylamino, Methoxy, Äthoxy, n- oder iso-Propoxy sowie Hydroxy.

Als nicht-reaktiver Substituent hat V vorzugsweise die Bedeutung Amino, N-$C_1$-$C_4$-Alkylamino, das im Alkylteil unsubstituiert oder durch Hydroxy, Sulfato oder Sulfo substituiert ist, Morpholino, Phenylamino oder N-$C_1$-$C_4$-Alkyl-N-phenylamino, worin das Phenyl jeweils unsubstituiert oder durch Sulfo, Carboxy, Methyl oder Methoxy substituiert ist. Besonders bevorzugt sind die Bedeutungen als Phenylamino oder N-$C_1$-$C_4$-Alkyl-N-phenylamino, worin das Phenyl jeweils unsubstituiert oder durch Sulfo, Carboxy, Methyl oder Methoxy substituiert ist.

Besonders bevorzugte fasserreaktive Reste sind solche der Formel (4g) oder insbesondere der Formel (4a).

Bedeutet $A_1$ den Rest eines Monoazo-, Polyazo- oder Metallkomplexazo-Chromophors, kommen insbesondere die folgenden in Betracht:

Chromophorreste eines Mono- oder Disazofarbstoffes der Formel

$$D\text{-}N\text{=}N\text{-}(M\text{-}N\text{=}N)_u\text{-}K\text{-} \qquad (6)$$

oder

$$\text{-}D\text{-}N\text{=}N\text{-}(M\text{-}N\text{=}N)_u\text{-}K \qquad (7),$$

worin D der Rest einer Diazokomponente der Benzol- oder Naphthalinreihe, M der Rest einer Mittelkomponente der Benzol- oder Naphthalinreihe, K der Rest einer Kupplungskomponente der Benzol-, Naphthalin-, Pyrazolon-, 6-Hydroxypyridon-(2)- oder Acetessigsäurearylamid-Reihe und u die Zahl 0 oder 1 sind, wobei D, M und K bei Azofarbstoffen übliche Substituenten, z.B. gegebenenfalls durch Hydroxy, Sulfo oder Sulfato weitersubstituiertes $C_1$-$C_4$-Alkyl oder $C_1$-$C_4$-Alkoxy, Halogen, Carboxy, Sulfo, Nitro, Cyan, Trifluormethyl, Sulfamoyl, Carbamoyl, Amino, Ureido, Hydroxy, Carboxy, Sulfomethyl, $C_2$-$C_4$-Alkanoylamino, gegebenenfalls im Phenylring durch $C_1$-$C_4$-Alkyl, $C_1$-$C_4$-Alkoxy, Halogen oder Sulfo substituiertes Benzoylamino, gegebenenfalls durch $C_1$-$C_4$-Alkyl, $C_1$-$C_4$-Alkoxy, Halogen, Carboxy oder Sulfo substituiertes Phenyl, sowie faserreaktive Reste tragen können. Ferner kommen noch die von den Farbstoffresten der Formeln (6) und (7) abgeleiteten Metallkomplexe in Betracht, wobei es sich insbesondere um Farbstoffreste eines 1:1-Kupferkomplexazofarbstoffes der Benzol- oder Naphthalinreihe handelt, worin das Kupferatom an je eine metallisierbare Gruppe, wie z.B. eine Hydroxygruppe, beidseitig in ortho-Stellung zur Azobrücke gebunden ist. Tragen die Chromophorreste der Formel (6) oder (7) einen Reaktivrest, so entspricht dieser bevorzugt der oben angegebenen Formel (4g) oder insbesondere der Formel (4a).

Bei den Resten der Formeln (6) und (7) handelt es sich bevorzugt um solche der Formel

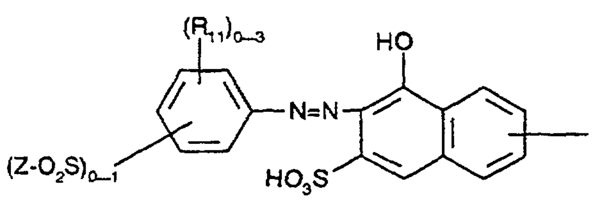

(8a),

worin $(R_{11})_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht und Z die oben angegebene Bedeutung hat,

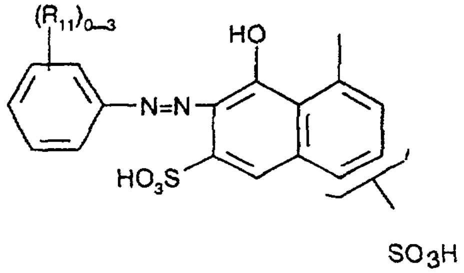

(8b),

worin $(R_{11})_{0-3}$ die zuvor angegebene Bedeutung hat,

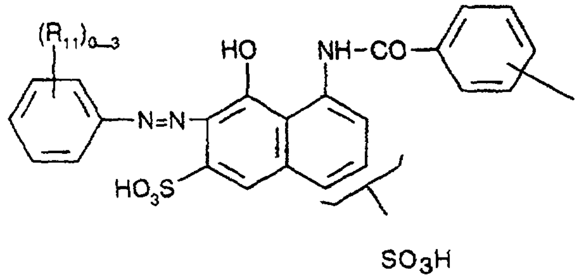

(8c),

worin $(R_{11})_{0-3}$ die zuvor angegebene Bedeutung hat,

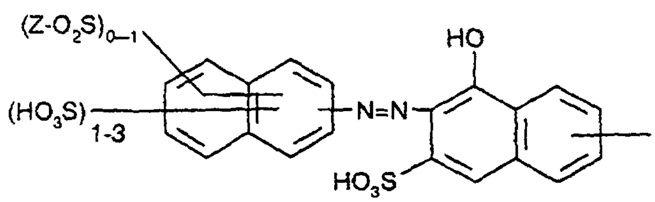

(8d),

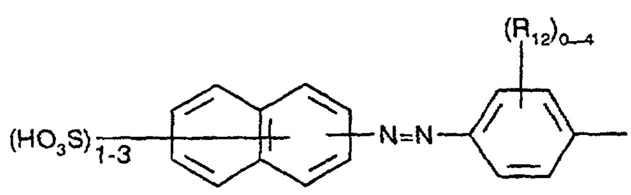

(8e),

worin $(R_{12})_{0-4}$ für 0 bis 4 gleiche oder verschiedene Substituenten aus der Gruppe Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht und Z die oben angegebene Bedeutung hat,

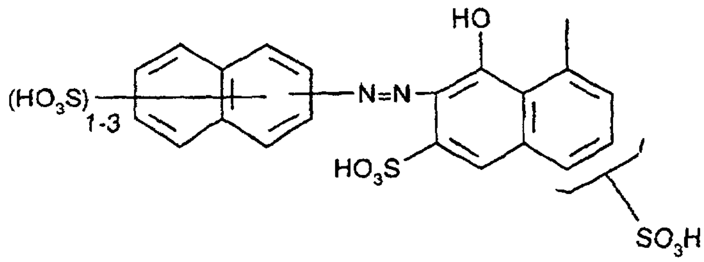

(8f),

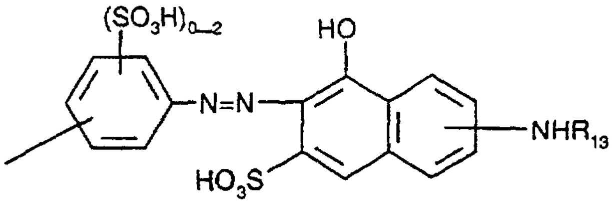

(8g),

worin $R_{13}$ $C_1$-$C_4$-Alkanoyl, Benzoyl oder ein gegebenenfalls weitersubstituierter Halogentriazinylrest ist,

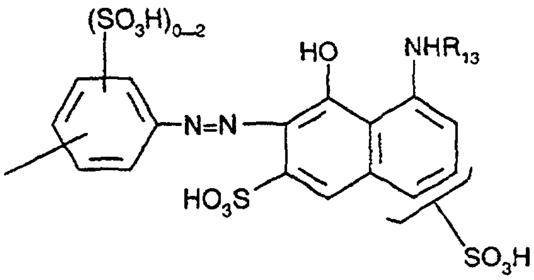

(8h),

worin $R_{13}$ $C_1$-$C_4$-Alkanoyl, Benzoyl oder ein gegebenenfalls weitersubstituierter Halogentriazinylrest ist,

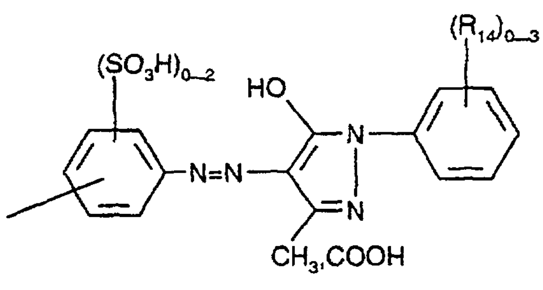

(8i),

worin $(R_{14})_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

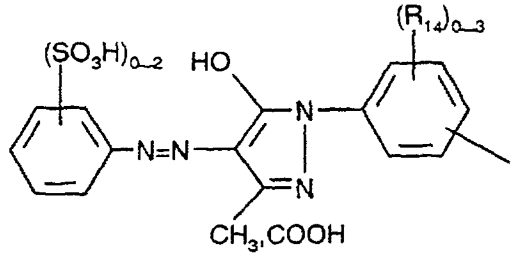

(8j),

worin $(R_{14})_{0-3}$ die oben angegebene Bedeutung hat,

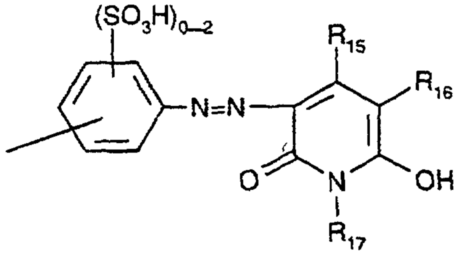

(8k),

worin $R_{15}$ und $R_{17}$ unabhängig voneinander Wasserstoff, $C_1$-$C_4$-Alkyl oder Phenyl, und $R_{16}$ Wasserstoff, Cyano, Carbamoyl oder Sulfomethyl ist,

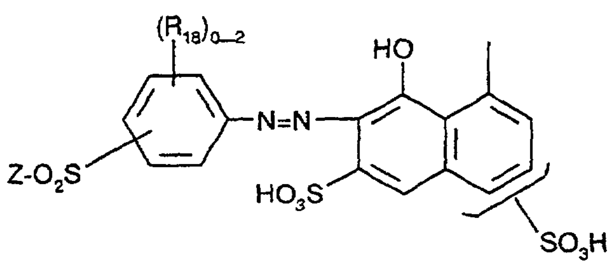

(8l),

worin $(R_{18})_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Z die oben angegebene Bedeutung hat,

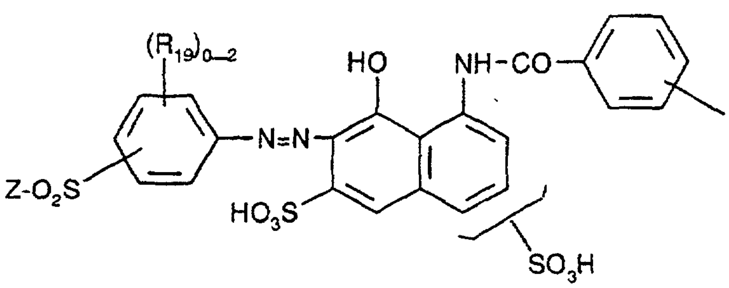

(8m),

worin $(R_{19})_{0-2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Z die oben angegebene Bedeutung hat,

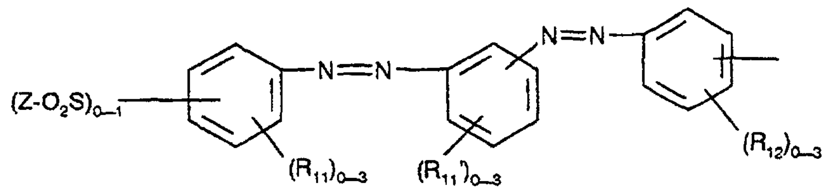

(8n)

oder

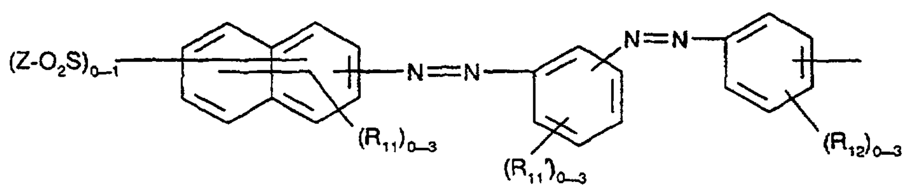

(8o)

oder

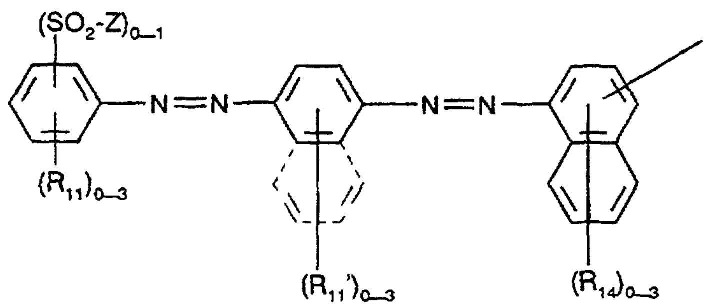

(8p) ,

oder

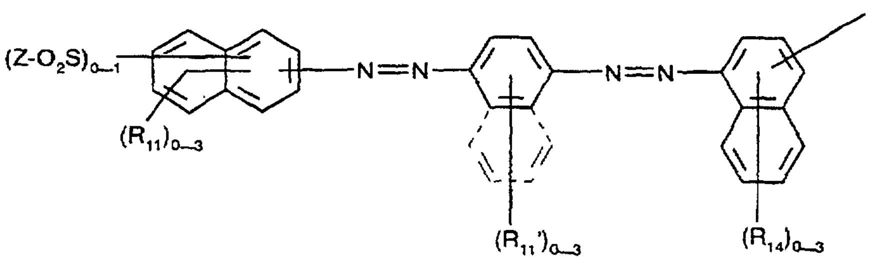

(8q),

worin $(R_{11})_{0-3}$, $(R_{12})_{0-3}$, $(R_{14})_{0-3}$ und Z jeweils die oben angegebene Bedeutung haben und $(R_{11}')_{0-3}$ für 0 bis 3 gleiche oder verschiedene Substituenten aus der Gruppe $C_1$-$C_4$-Alkyl, $C_1$-$C_4$-Alkoxy, Halogen, Carboxy oder Sulfo steht.

Als gegebenenfalls weitersubstituierte Halogentriazinylreste kommen insbesondere solche der oben angegebenen Formel (4g) in Betracht.

Bei dem Rest eines Formazanchromophors handelt es sich bevozugt um solche der Formel

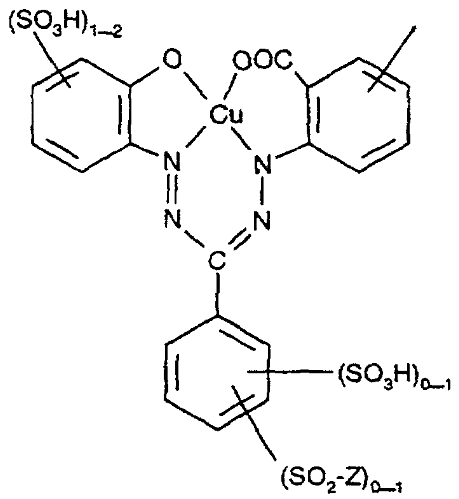

(8r)

oder

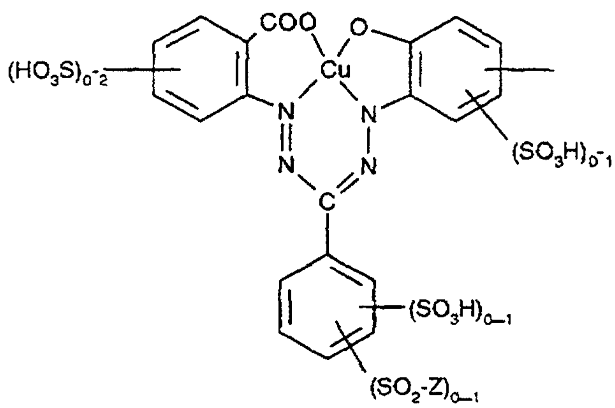

(8s),

worin Z die oben angegebene Bedeutung hat und die Benzolkerne keine weiteren Substituenten enthalten oder durch $C_1$-$C_4$-Alkyl, $C_1$-$C_4$-Alkoxy, $C_1$-$C_4$-Alkylsulfonyl, Halogen oder Carboxy weitersubstituiert sind.

Bei dem Rest eines Phthalocyaninchromophors handelt es sich bevorzugt um solche der Formel

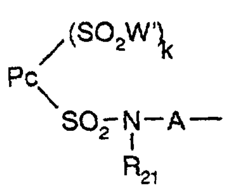

(9),

worin Pc der Rest eines Metallphthalocyanins, insbesondere der Rest eines Kupfer- oder Nickelphthalocyanins; W' -OH und/oder $-NR_{20}R_{20}'$; $R_{20}$ und $R_{20}'$ unabhängig voneinander Wasserstoff oder gegebenenfalls durch Hydroxy oder Sulfo substituiertes $C_1$-$C_4$-Alkyl; $R_{21}$ Wasserstoff oder $C_1$-$C_4$-Alkyl; A ein gegebenenfalls durch $C_1$-$C_4$-Alkyl, Halogen, Carboxy oder Sulfo substituierter Phenylenrest oder ein $C_2$-$C_6$-Alkylenrest; und k 1 bis 3 ist.

Bei dem Rest eines Dioxazinchromophors handelt es sich bevorzugt um solche der Formel

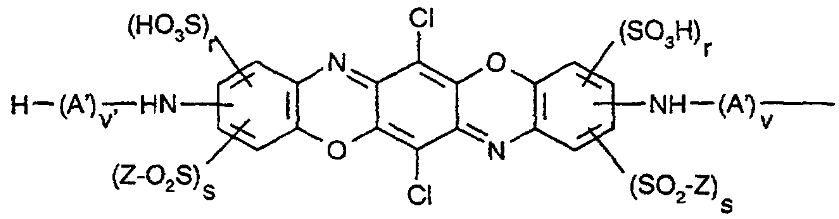

(10),

worin A' ein gegebenenfalls durch $C_1$-$C_4$-Alkyl, Halogen, Carboxy oder Sulfo substituierter Phenylenrest oder ein $C_2$-$C_6$-Alkylenrest ist, r, s, v und v' unabhängig voneinander je die Zahl 0 oder 1 bedeuten und Z die zuvor angegebene Bedeutung hat.

Bei dem Rest eines Anthrachinonchromophors handelt es sich bevorzugt um solche der Formel

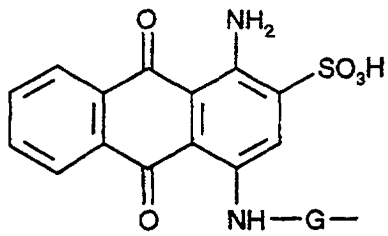

(11),

worin G einen unsubstituierten oder durch $C_1$-$C_4$-Alkyl, $C_1$-$C_4$-Alkoxy, Halogen, Carboxy oder Sulfo substituierten Phenylenrest oder einen Cyclohexylen-, Phenylenmethylen- oder $C_2$-$C_6$-Alkylenrest bedeutet.

Bei dem Rest $A_1$ handelt es sich bevorzugt um einen Rest der Formeln (8a) bis (8q) oder um einen Rest der Formel (11), insbesondere um solche Reste der Formeln (8a) bis (8q), welche keinen faserreaktiven Rest enthalten. Von besonderem Interesse sind die Reste der Formeln (8a), (8d), (8e), (8i), (8k), (8n), (8o), (8p) und (8p), insbesondere die Reste der Formeln (8a), (8d), (8e) und (8n) bis (8q).

Die Reste $A_1$ und $A_2$ enthalten bevorzugt jeweils mindestens eine Sulfogruppe, insbesondere 1 bis 4 Sulfogruppen und vorzugsweise 1 bis 3 Sulfogruppen.

Als faserreaktive Reste im Rest $D_1$ kommen beispielsweise die oben als Substituenten des Restes $A_1$ genannten faserreaktiven Reste in Betracht, wobei die obigen Bevorzugungen gelten. Besonders bevorzugt als faserreaktive Reste im Rest $D_1$ sind solche der Formeln (4) und (4a).

Besonders bevorzugt bedeutet $D_1$ unsubstituiertes oder durch $C_1$-$C_4$-Alkyl, $C_1$-$C_4$-Alkoxy, $C_2$-$C_4$-Alkanoylamino, Sulfo, Halogen oder Carboxy substituiertes Phenyl oder Naphthyl. Ganz besonders bevorzugt bedeutet $D_1$ durch $C_1$-$C_4$-Alkyl, $C_1$-$C_4$-Alkoxy, Sulfo oder Halogen substituiertes Phenyl oder Naphthyl, insbesondere durch Sulfo substituiertes Phenyl oder Naphthyl. Von besonderem Interesse als Reste $D_1$ sind die entsprechenden Phenylreste.

Bevorzugt sind Reaktivfarbstoffe der Formel (1), worin

$R_1$, $R_2$, $R_3$, $R_4$, $R_5$ und $R_6$ unabhängig voneinander Wasserstoff oder unsubstituiertes oder durch Hydroxy, Sulfo, Sulfato, Cyano oder Carboxy substituiertes $C_1$-$C_4$-Alkyl sind,
$X_1$ und $X_2$ Chlor oder insbesondere Fluor sind,
$B_1$ ein $C_2$-$C_{12}$-Alkylenrest ist, welcher durch 1, 2 oder 3 Glieder -O- unterbrochen sein kann und unsubstituiert oder durch Hydroxy substituiert ist,
Z Vinyl oder ein Rest der Formel $-CH_2-CH_2-OSO_3H$, und
$D_1$ unsubstituiertes oder durch $C_1$-$C_4$-Alkyl, $C_1$-$C_4$-Alkoxy, $C_2$-$C_4$-Alkanoylamino, Sulfo, Halogen, Carboxy oder einen faserreaktiven Rest substituiertes Phenyl oder Naphthyl, insbesondere unsubstituiertes oder durch $C_1$-$C_4$-Alkyl, $C_1$-$C_4$-Alkoxy, $C_2$-$C_4$-Alkanoylamino, Sulfo, Halogen oder Carboxy substituiertes Phenyl oder Naphthyl, ist.
Für den Rest $A_1$ gelten hierbei die oben angegebenen Bedeutungen und Bevorzugungen.

Besonders bevorzugt sind Reaktivfarbstoffe der Formel (1), worin

$R_1$, $R_2$, $R_3$, $R_4$, $R_5$ und $R_6$ Wasserstoff,
$X_1$ und $X_2$ Chlor oder insbesondere Fluor sind,
$B_1$ ein Rest der Formel $-CH_2-CH(R_7)-$ oder $-(R_7)-CH-CH_2-$ ist, worin $R_7$ $C_1$-$C_4$-Alkyl bedeutet, alk ein $C_2$-$C_3$-Alky-

lenrest,
Z Vinyl oder ein Rest der Formel $-CH_2-CH_2-OSO_3H$, und
$D_1$ unsubstituiertes oder durch $C_1$-$C_4$-Alkyl, $C_1$-$C_4$-Alkoxy, $C_2$-$C_4$-Alkanoylamino, Sulfo, Halogen, Carboxy oder einen faserreaktiven Rest substituiertes Phenyl oder Naphthyl, insbesondere unsubstituiertes oder durch $C_1$-$C_4$-Alkyl, $C_1$-$C_4$-Alkoxy, $C_2$-$C_4$-Alkanoylamino, Sulfo, Halogen oder Carboxy substituiertes Phenyl oder Naphthyl und vorzugsweise durch Sulfo substituiertes Phenyl oder Naphthyl ist. Für den Rest $A_1$ gelten hierbei die oben angegebenen Bedeutungen und Bevorzugungen.

Eine Gruppe von interessanten Reaktivfarbstoffen der Formel (1) umfasst solche, worin $B_1$ ein Rest der Formel $-CH_2-CH(R_7)-$ oder $-(R_7)-CH-CH_2-$ ist, wobei für $R_7$ die oben angegebenen Bedeutungen und Bevorzugungen gelten, oder vorzugsweise solche Reaktivfarbstoffe der Formel (1), worin einer der Reste $R_2$ und $R_3$ durch Hydroxy, Sulfo, Sulfato, Cyano oder Carboxy substituiertes $C_1$-$C_4$-Alkyl ist und der andere der Reste $R_2$ und $R_3$ Wasserstoff oder $C_1$-$C_4$-Alkyl, insbesondere Wasserstoff, ist.

Gegenstand der vorliegenden Erfindung ist ferner ein Verfahren zur Herstellung von Reaktivfarbstoffen der Formel (1), welches dadurch gekennzeichnet ist, dass man eine Verbindung der Formel

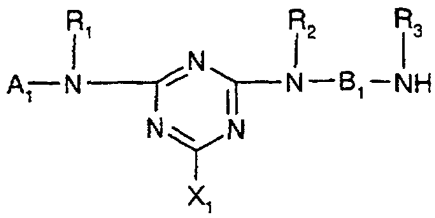

(12a)

mit einer Verbindung der Formel

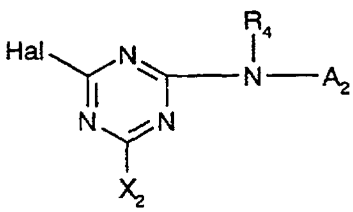

(13a),

oder eine Verbindung der Formel

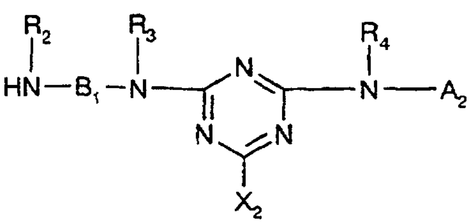

(12b)

mit einer Verbindung der Formel

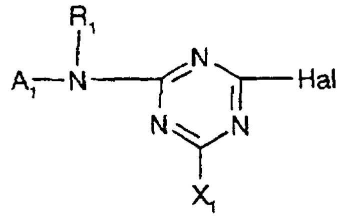

(13b)

kondensiert, wobei Hal Halogen, vorzugsweise Chlor oder Fluor, bedeutet und $A_1$, $A_2$, $B_1$, $X_1$, $X_2$, $R_1$, $R_2$, $R_3$ und $R_4$, die unter Formel (1) angegebenen Bedeutungen haben.

Die Verbindungen der Formeln (12a), (12b), (13a) und (13b) sind bekannt oder können in Analogie zu bekannten Verbindungen erhalten werden.

So können Verbindungen der Formeln (13a) und (13b) durch Kondensation von Verbindungen der Formel $A_2$-$NHR_4$ oder $A_1$-$NHR_1$ mit Cyanurchlorid oder Cyanurfluorid erhalten werden. Verbindungen der Formel (12a) und (12b) können erhalten werden, indem eine Verbindung der Verbindung der Formel (13a) oder (13b) mit einem Diamin der Formel $R_2$-HN-$B_1$-NH-$R_3$ kondensiert wird, wobei gegebenenfalls ein Ueberschuss des Diamins verwendet wird. Verbindungen der Formel $A_1$-$NHR_1$ können z.B. gemäss den in der US-A-4,841,028 beschriebenen Verfahren erhalten werden.

Die einzelnen Kondensationsreaktionen können gemäss an sich bekannter Verfahren erfolgen, wie z.B. den in der GB-A-2,085,908 beschriebenen Verfahren. In der Regel erfolgen die Kondensationsreaktionen in wässriger Lösung, bei einer Temperatur von beispielsweise 0 bis 50°C und einem pH-Wert von z.B. 4 bis 9.

Die erfindungsgemässen Reaktivfarbstoffe der Formel (1) welche eine Sulfo- oder Sulfatogruppe enthalten liegen entweder in der Form ihrer freien Säure oder vorzugsweise als deren Salze vor. Als Salze kommen beispielsweise die Alkali-, Erdalkali- oder Ammoniumsalze oder die Salze eines organischen Amins in Betracht. Als Beispiele seien die Natrium-, Lithium-, Kalium- oder Ammoniumsalze oder das Salz des Mono-, Di- oder Triäthanolamins genannt.

Die erfindungsgemässen Reaktivfarbstoffe eignen sich zum Färben und Bedrucken der verschiedensten Materialien, wie hydroxylgruppenhaltigen oder stickstoffhaltigen Fasermaterialien. Als Beispiele seien Seide, Leder, Wolle, Polyamidfasern und Polyurethane, und insbesondere cellulosehaltige Fasermaterialien aller Art genannt. Solche cellulosehaltige Fasermaterialien sind beispielsweise die natürlichen Cellulosefasern, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasern geeignet, die in Mischgeweben enthalten sind, z.B. von Gemischen aus Baumwolle mit Polyesterfasern oder Polyamidfasern. Besonders geeignet sind die erfindungsgemässen Farbstoffe zum Färben oder Bedrucken von cellulosehaltigen Fasermaterialien. Weiterhin können sie zum Färben oder Bedrucken von natürlichen oder synthetischen Polyamidfasermaterialien verwendet werden.

Die erfindungsgemässen Farbstoffe lassen sich auf verschiedene Weise auf das Fasermaterial applizieren und auf der Faser fixieren, insbesondere in Form von wässrigen Farbstofflösungen und -druckpasten. Sie eignen sich sowohl für das Ausziehverfahren als auch zum Färben nach dem Foulard-Färbeverfahren, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Besonders geeignet sind sie für das sogenannte Kaltverweilverfahren, wonach der Farbstoff zusammen mit dem Alkali auf dem Foulard aufgebracht wird und danach durch mehrstündiges Lagern bei Raumtemperatur fixiert wird. Nach dem Fixieren werden die Färbungen oder Drucke mit kaltem und heissem Wasser, gegebenenfalls unter Zusatz eines dispergierend Mittels gründlich gespült.

Die erfindungsgemässen Farbstoffe zeichnen sich durch hohe Reaktivität, gutes Fixiervermögen und ein sehr gutes Aufbauvermögen aus. Sie können daher nach dem Ausziehfärbeverfahren bei niedrigen Färbetemperaturen eingesetzt werden und erfordern beim Pad-Steam-Verfahren nur kurze Dämpfzeiten. Die Fixiergrade sind hoch und die nicht fixierten Anteile können leicht ausgewaschen werden, wobei die Differenz zwischen Ausziehgrad und Fixiergrad bemerkenswert klein, d.h. der Seifverlust sehr gering ist. Die erfindungsgemässen Farbstoffe eignen sich auch besonders zum Druck, vor allem auf Baumwolle, ebenso aber auch zum Bedrucken von stickstoffhaltigen Fasern, z. B. von Wolle oder Seide oder von Mischgeweben, die Wolle oder Seide enthalten.

Die mit den erfindungsgemässen Farbstoffen hergestellten Färbungen und Drucke besitzen eine hohe Farbstärke und eine hohe Faser-Farbstoff-Bindungsstabilität, sowohl in saurem als auch in alkalischem Bereich, weiterhin eine gute Lichtechtheit und sehr gute Nassechtheitseigenschaften, wie Wasch-, Wasser-, Seewasser-, Ueberfärbe- und Schweissechtheiten, sowie eine gute Plissierechtheit, Bügelechtheit und Reibechtheit.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders

vermerkt. Gewichtsteile stehen zu Volumenteilen im Verhältnis von Kilogramm zu Liter.

Beispiel 1:

a) 101,2 Teile Anilin-2,4-disulfonsäure werden in 400 Teilen Wasser mit 100 Teilen konzentrierter Salzsäure bei einer Temperatur von 0 bis 2 °C mit 125 Teilen einer 4-normalen wässrigen Natriumnitritlösung diazotiert. Nach 15 Minuten Rührzeit wird der Nitritüberschuss durch Zugabe von Sulfaminsäure zerstört. Diese Suspension gibt man zu 147 Teilen eines Amins, welches in Form der freien Säure der Verbindung der Formel

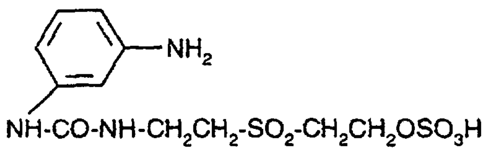

(101)

entspricht, und kuppelt bei einem pH-Wert von 2 bis 3 und einer Temperatur von 0 bis 5 °C. Nach beendeter Kupplung wird der pH auf einen Wert von 7 angehoben und durch Zusatz von Natriumdihydrogenphosphatpuffer stabilisiert.

Die Lösung wird auf eine Temperatur von 0 °C gekühlt, mit etwas Eis versetzt und unter intensivem Rühren werden 56,7 Teile Cyanurfluorid langsam eingetropft und durch Zudosieren von 5-normaler wässriger Natriumhydroxidlösung ein pH-Wert von 7 eingehalten.

Zu diesem Acylierungsprodukt gibt man 44,4 Teile 1,2-Diaminopropan als Dihydrochlorid hinzu und der pH-Wert wird auf 5,5 bis 6 angehoben. Die Temperatur lässt man auf 20 °C ansteigen und rührt noch eine Stunde bei 30 °C nach. Die Reaktionslösung wird mit 10 % Natriumchlorid versetzt, der ausgefallene Farbstoff abfiltriert und mit wässriger Natriumchloridlösung vom Aminüberschuss freigewaschen. Man erhält eine Verbindung, welche in Form der freien Säure der Formel

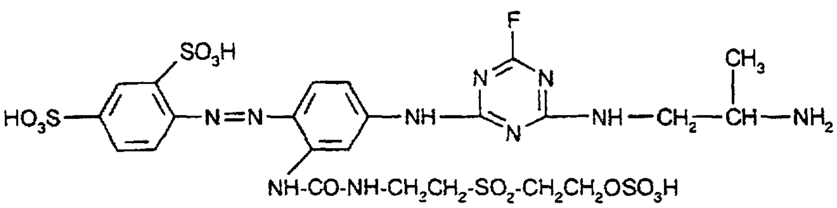

(102)

entspricht.

b) 6,06 Teile eines Amins, welches in Form der freien Säure der Formel

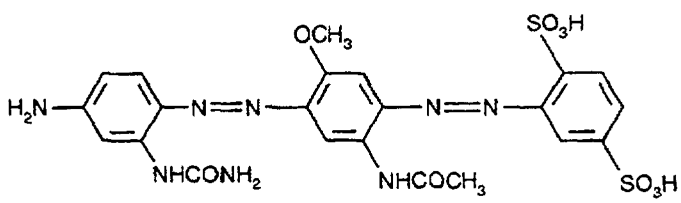

(103)

entspricht, werden in Wasser bei einem neutralem pH-Wert gelöst und die Lösung wird auf eine Temperatur von 0 °C gekühlt. Nach Zugabe eines Phosphatpuffers und einer geringen Menge eines Tensids werden zu der so erhaltenen Lösung unter intensivem Rühren 1,5 Teile Cyanurfluorid zugetropft. Nach der sofort beendigten Umsetzung gibt man 8,1 Teile der gemäss Beispiel 1a) erhältlichen Verbindung der Formel (102) zu, stellt den pH auf einen Wert von 7,5 bis 8 ein und erhöht die Temperatur langsam von 20 auf 30 °C. Der pH-Wert wird durch Zugabe einer 2-normalen wässrigen Natriumhydroxidlösung konstant gehalten. Man erhält eine braune Lösung, die nach beendeter Reaktion auf übliche Art dialysiert und gefriergetrocknet wird. Man erhält einen Farbstoff, welcher in Form der freien Säure der Verbindung der Formel

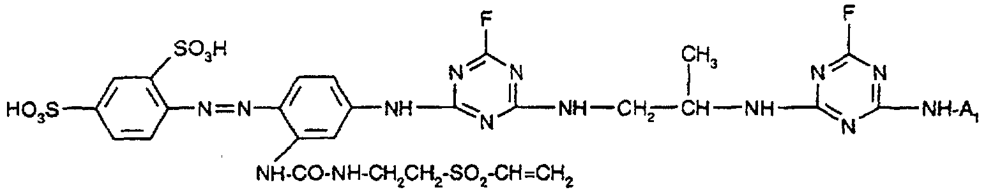

(104),

wobei $A_1$ ein Rest der Formel

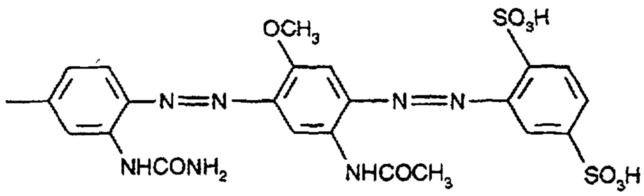

(105)

ist, entspricht. Der Farbstoff der Formel (104) färbt Baumwolle in einem orangen Farbton.

Beispiele 2 bis 39:

Verfährt man wie in Beispiel 1 angegeben, verwendet jedoch anstelle von 6,06 Teilen eines Amins der Formel (103) eine äquimolare Menge von einem der in der folgenden Tabelle 1 in Spalte 2 angegebenen Amine, so erhält man analoge Farbstoffe, welche Baumwolle in den in Tabelle 1 in Spalte 3 angegebenen Farbtönen färben.

Tabelle 1

| Bsp. | Amin | Farbton auf Baumwolle |
|---|---|---|
| 2 | 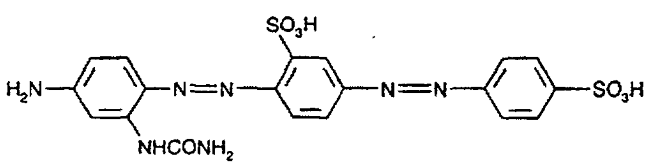 | orange |

| | | |
|---|---|---|
| 3 | 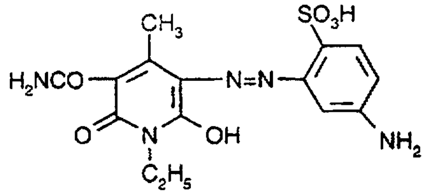 | gelb |
| 4 | 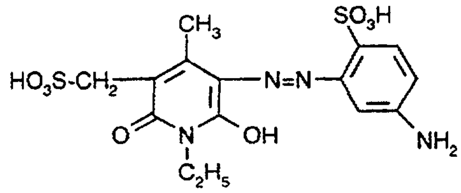 | gelb |
| 5 | 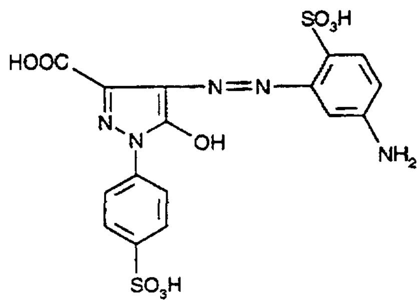 | gelb |
| 6 | 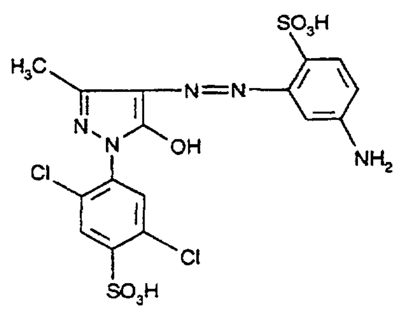 | gelb |
| 7 | 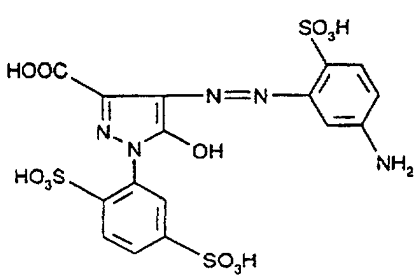 | gelb |

8 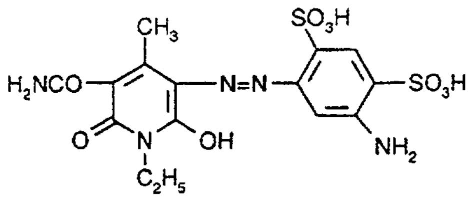 gelb

9 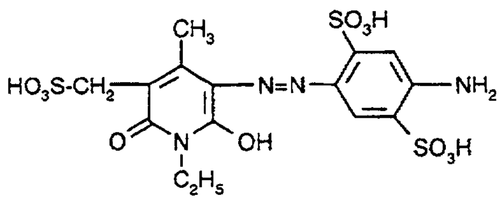 gelb

10 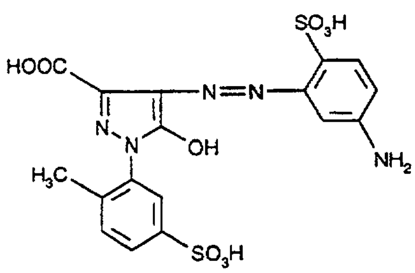 gelb

11 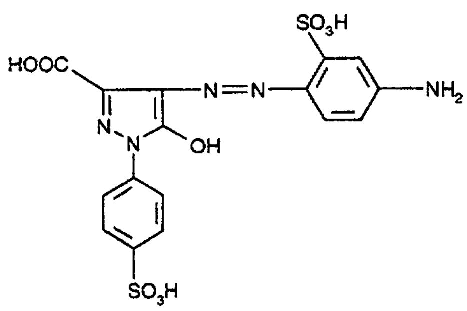 gelb

12 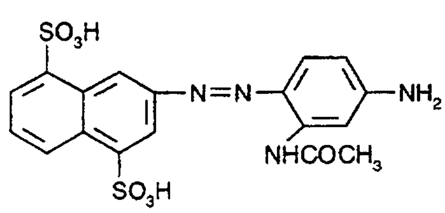 goldgelb

13 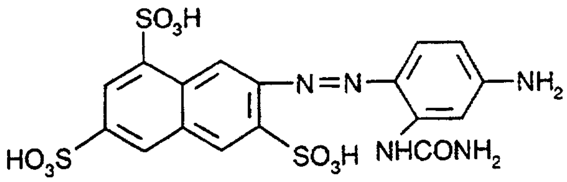 goldgelb

14 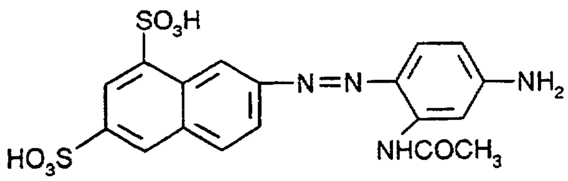 goldgelb

15 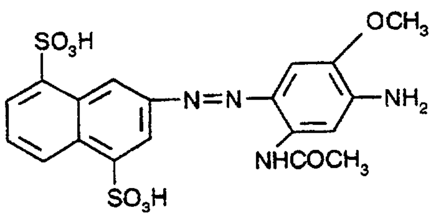 gelbstichig rot

16 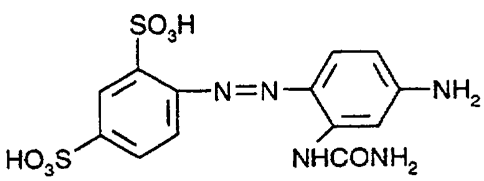 gelb

17 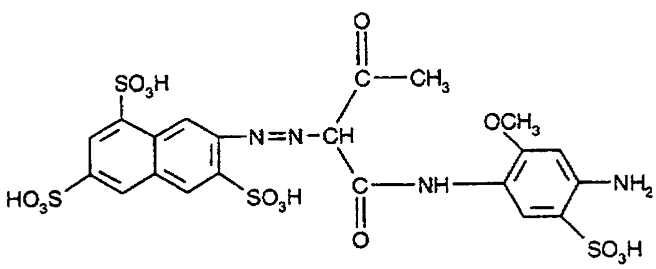 gelb

18 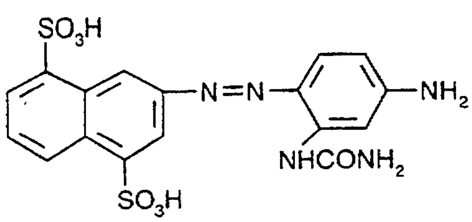 gelb

19 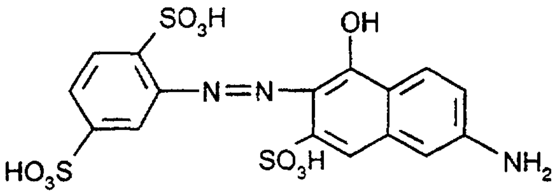 gelbstichig orange

20 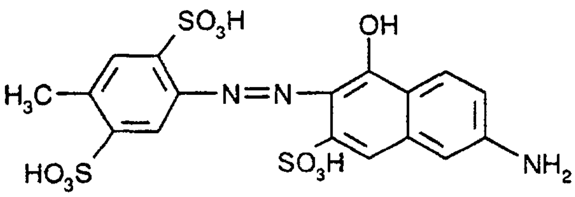 orange

21 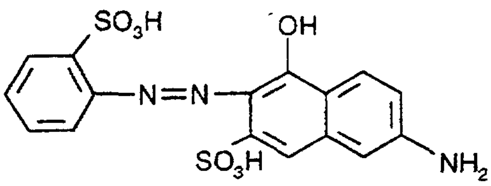 orange

22 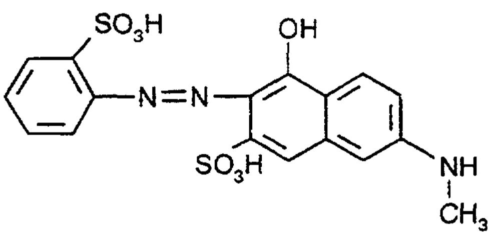 gelbstichig orange

23 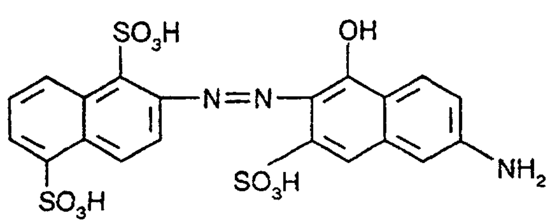 gelbstichig orange

24 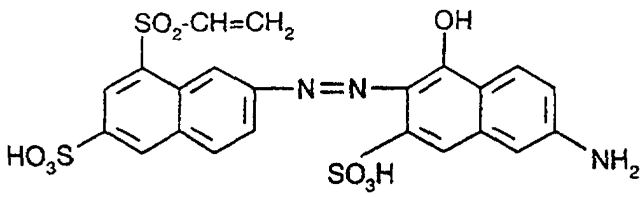 gelbstichig orange

25 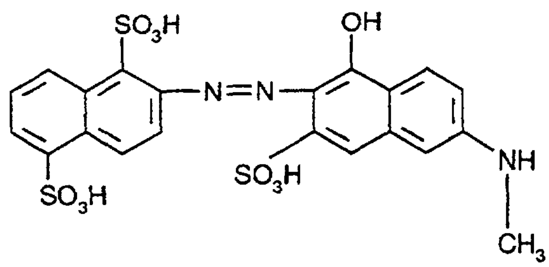 gelbstichig orange

26 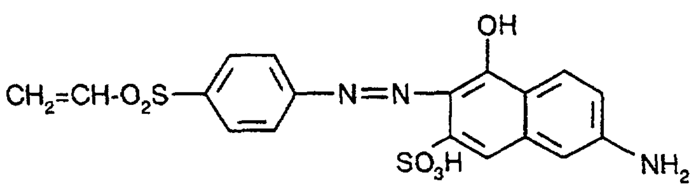 gelbstichig orange

27 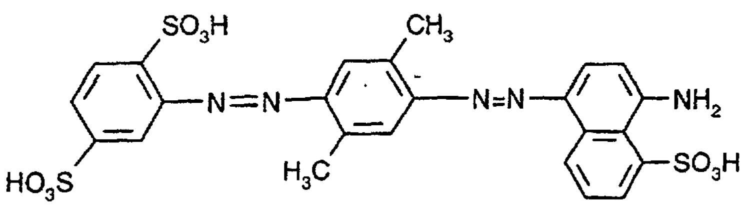 braun

28 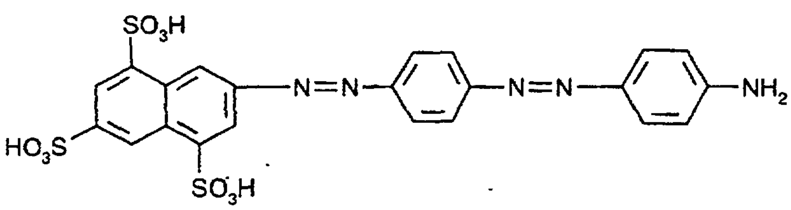 braun

29 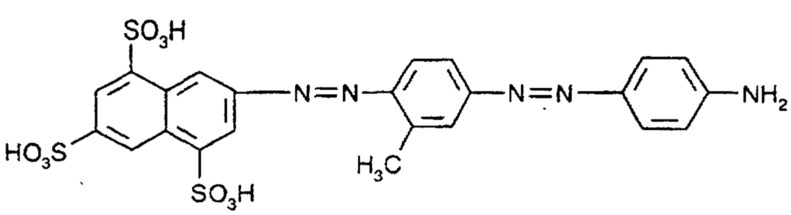 braun

30 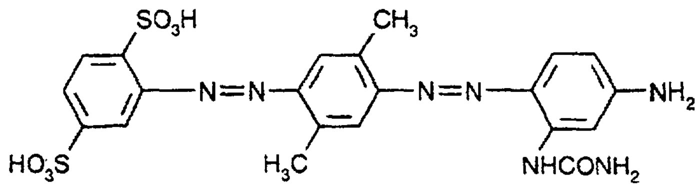 braun

31 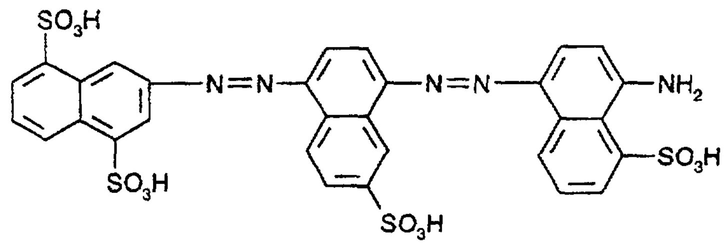 braun

32 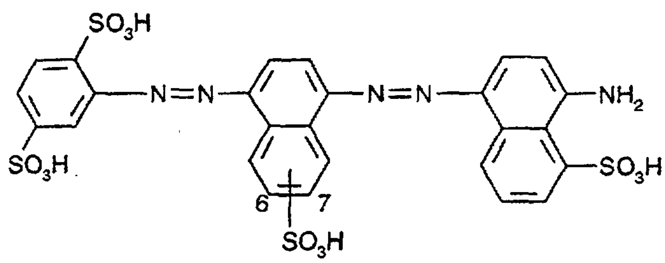 braun

33 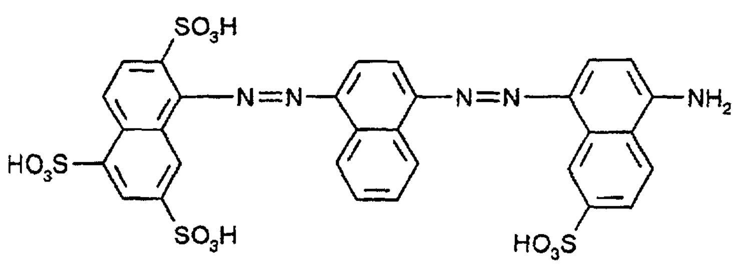 braun

34 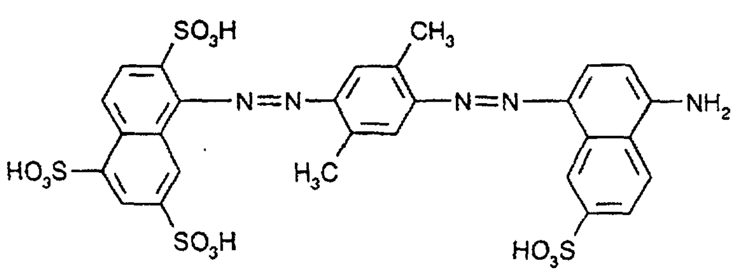 braun

35 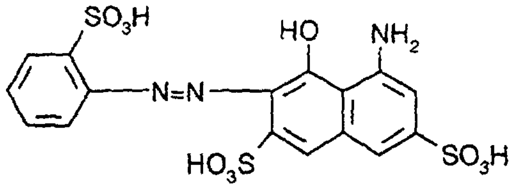 gelbstichig rot

36 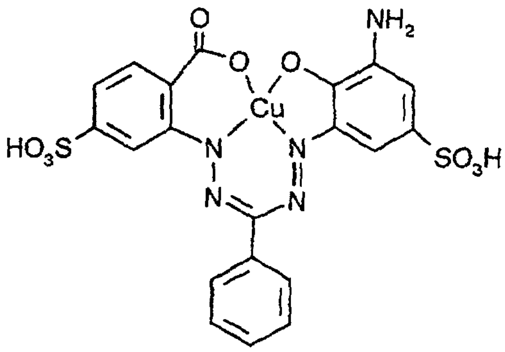 olive

37 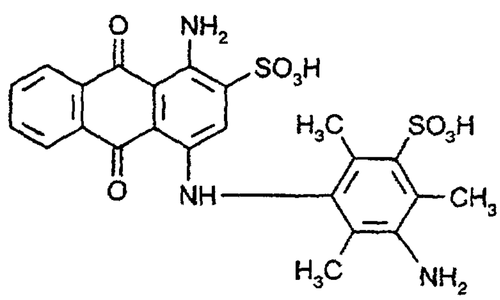 olive grün

38 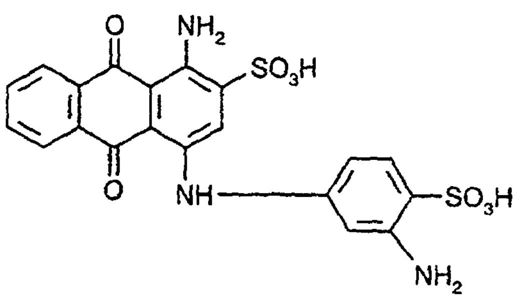 olive grün

| | | |
|---|---|---|
| 39 | 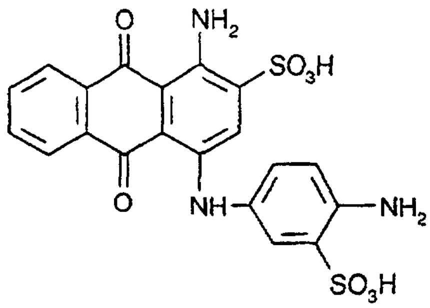 | olive grün |

Verfährt man wie in Beispiel 1 angegeben, verwendet jedoch anstelle von 44,4 Teilen 1,2-Diaminopropan eine äquimolare Menge eines der nachstehenden Diamine, so erhält man analoge Farbstoffe:

Diamin

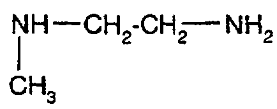

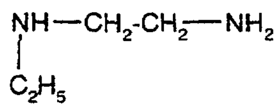

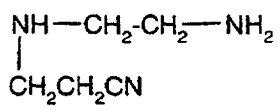

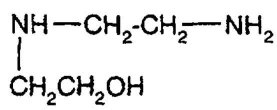

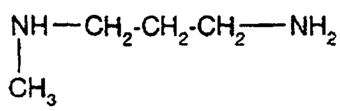

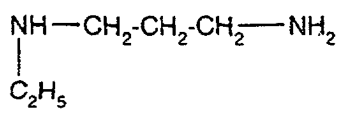

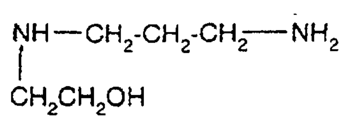

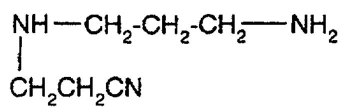

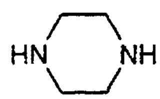

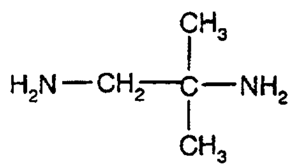

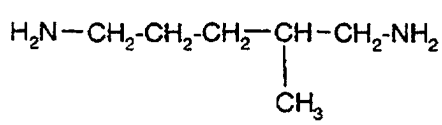

$$H_2N\text{-}(CH_2)_2\text{-}O\text{-}(CH_2)_2\text{-}O\text{-}(CH_2)_2\text{-}NH_2$$

Analoge Farbstoffe werden erhalten, wenn man wie in einem der Beispiele 2 bis 39 angegeben verfährt, jedoch anstelle von 44,4 Teilen 1,2-Diaminopropan eine äquimolare Menge eines der vorstehenden Diamine verwendet.

<u>Beispiel 40:</u>

a) 101,2 Teile Anilin-2,4-disulfonsäure werden in 400 Teilen Wasser mit 100 Teilen konzentrierter Salzsäure bei einer Temperatur von 0 bis 2 °C mit 125 Teilen einer wässrigen 4-normalen Natriumnitritlösung diazotiert. Nach 15 Minuten Rührzeit wird der Nitritüberschuss durch Zugabe von Sulfaminsäure zerstört. Diese Suspension gibt man zu 160 Teilen eines Amins, welches in Form der freien Säure der Verbindung der Formel

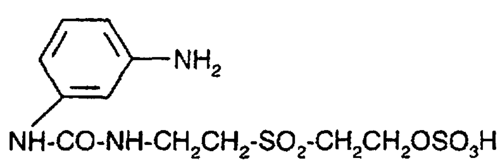

(101)

entspricht, und kuppelt bei einem pH-Wert von 2 bis 3 und einer Temperatur von 0 bis 5 °C. Nach beendeter Kupplung wird der pH auf einen Wert von 7 angehoben und durch Zusatz von Natriumdihydrogenphosphatpuffer stabilisiert.
Die Lösung wird auf eine Temperatur von 0 °C gekühlt, mit etwas Eis versetzt und unter intensivem Rühren lässt man bei einer Temperatur von 0 bis 5 °C eine Suspension von 77,5 Teilen Cyanurchlorid in 200 Teilen Eiswasser zufliessen. Der pH wird hierbei durch Zudosierung von wässriger Sodalösung bei einem Wert von 5,5 konstant gehalten. Zu diesem Acylierungsprodukt gibt man 44,4 Teile 1,2-Diaminopropan als Dihydrochlorid hinzu und der pH-Wert wird

auf 5,5 bis 6 angehoben. Während der Kondensation lässt man die Temperatur leicht ansteigen und rührt noch eine Stunde bei 30 °C nach. Die Reaktionsmasse wird mit 10 % Natriumchlorid versetzt, der ausgefallene Farbstoff abfiltriert und mit wässriger Natriumchloridlösung vom Aminüberschuss freigewaschen. Man erhält eine Verbindung, welche in Form der freien Säure der Formel

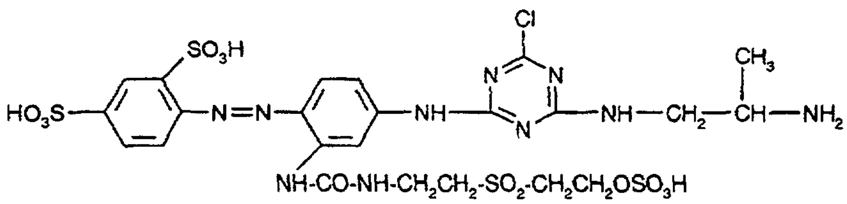

(106)

entspricht.

b) 6,06 Teile eines Amins, welches in Form der freien Säure der Formel

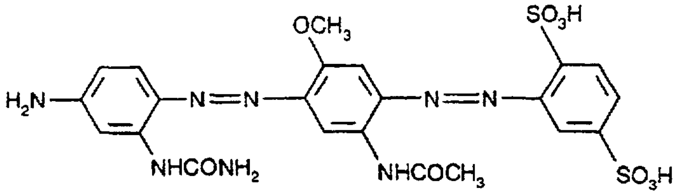

(103)

entspricht, werden in Wasser bei einem neutralem pH-Wert gelöst und die Lösung wird auf eine Temperatur von 0 °C gekühlt. Nach Zugabe eines Phosphatpuffers und einer geringen Menge eines Tensids wird die so erhaltene Lösung unter intensivem Rühren auf eine eiskalte Suspension von 1,9 Teilen Cyanurchlorid in Wasser getropft. Nach beendigter Umsetzung gibt man 8,1 Teile der gemäss Beispiel 40a) erhältlichen Verbindung der Formel (106) zu, stellt den pH auf einen Wert von 8,5 bis 9 ein und erhöht die Temperatur langsam von 20 auf 30 °C. Der pH-Wert wird durch Zugabe einer 2-normalen wässrigen Natriumhydroxidlösung konstant gehalten. Man erhält eine Lösung, die nach beendeter Reaktion auf übliche Art dialysiert und gefriergetrocknet wird. Man erhält einen Farbstoff, welcher in Form der freien Säure der Verbindung der Formel

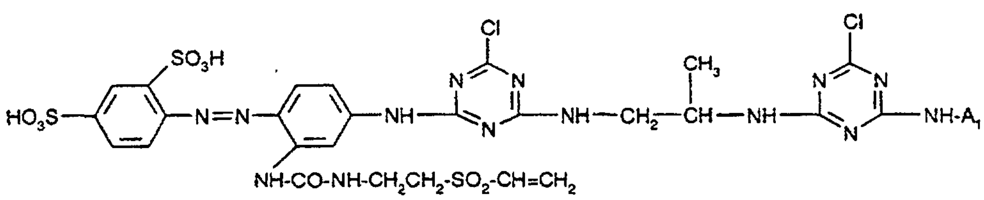

(107),

wobei $A_1$ ein Rest der Formel

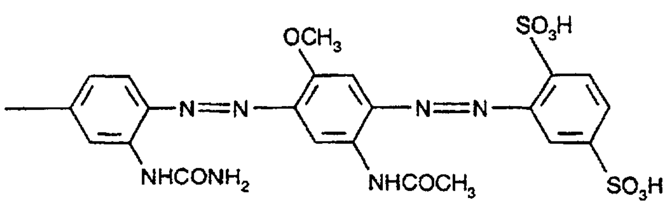

(105)

ist, entspricht. Der Farbstoff der Formel (107) färbt Baumwolle in einem orangen Farbton.

Beispiele 41 bis 78:

Verfährt man wie in Beispiel 40 angegeben, verwendet jedoch anstelle von 6,06 Teilen eines Amins der Formel (103) eine äquimolare Menge von einem der in der vorstehenden Tabelle 1 in Spalte 2 angegebenen Amine, so erhält man analoge Farbstoffe, welche Baumwolle in den in der Tabelle 1 in Spalte 3 angegebenen Farbtönen färben.

Verfährt man wie in Beispiel 40 angegeben, verwendet jedoch anstelle von 44,4 Teilen 1,2-Diaminopropan eine äquimolare Menge eines der nachstehenden Diamine, so erhält man analoge Farbstoffe:

Diamin

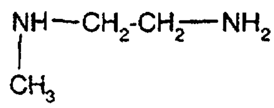

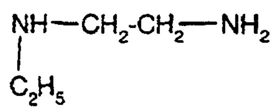

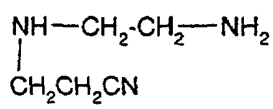

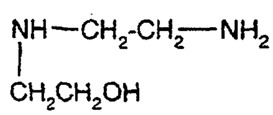

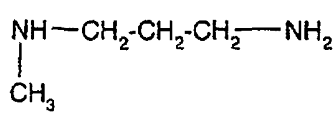

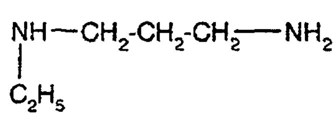

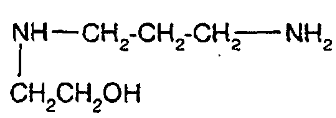

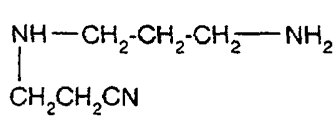

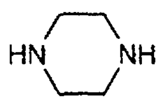

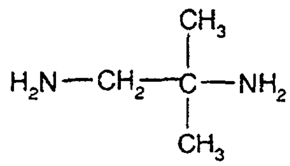

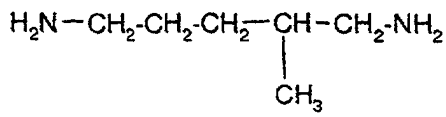

$H_2N-(CH_2)_2-O-(CH_2)_2-O-(CH_2)_2-NH_2$

Analoge Farbstoffe werden erhalten, wenn man wie in einem der Beispiele 41 bis 78 angegeben verfährt, jedoch anstelle von 44,4 Teilen 1,2-Diaminopropan eine äquimolare Menge eines der vorstehenden Diamine verwendet.

Beispiele 79 bis 101:

Analoge Farbstoffe werden erhalten, wenn man wie in Beispiel 1 angegeben verfährt, jedoch anstelle von 101,2 Teilen Anilin-2,4-disulfonsäure eine äquimolare Menge eines Amins der Formel $D_1$-$NH_2$, wobei $D_1$ die in der folgenden Tabelle 2 in Spalte 2 angegebenen Bedeutungen hat, verwendet.

Tabelle 2

| Bsp. | $D_1$ |
|---|---|
| 79 | 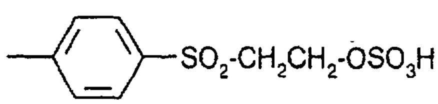 |

80

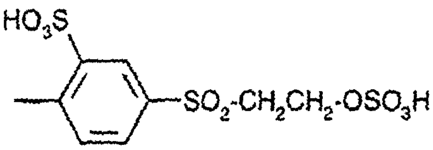

81

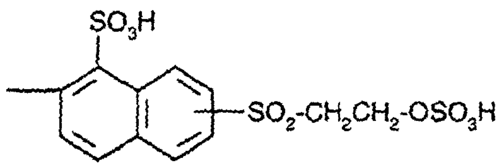

82

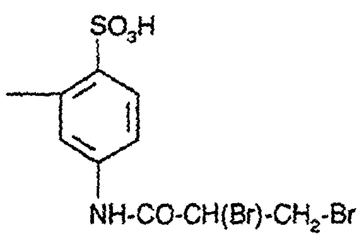

83

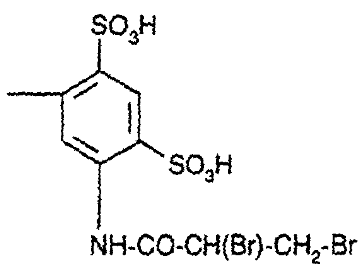

84

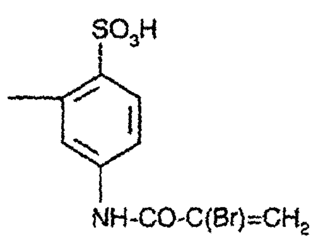

85

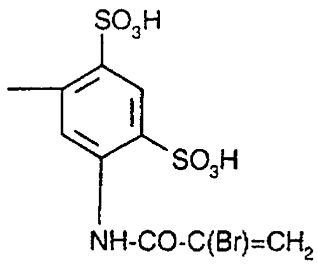

86

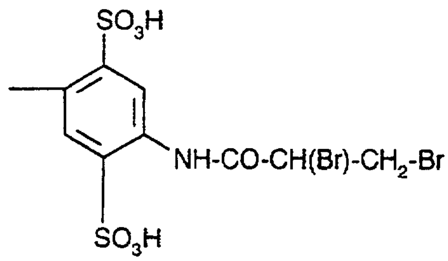

87

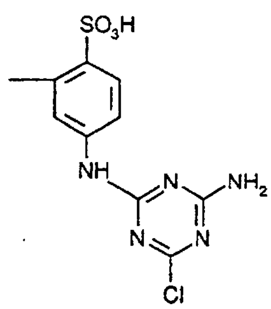

88

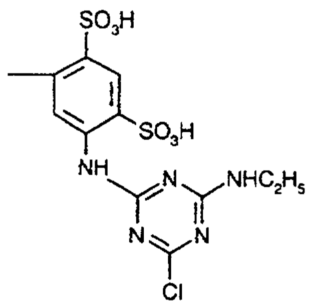

89

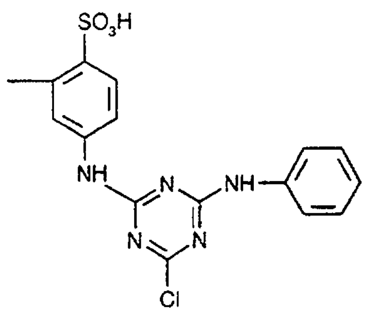

90

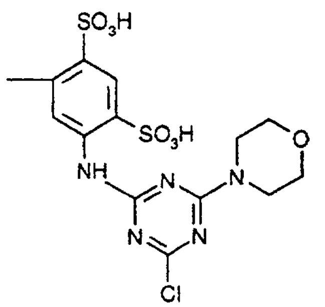

91

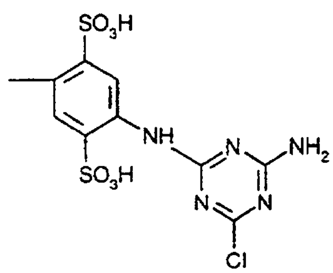

92

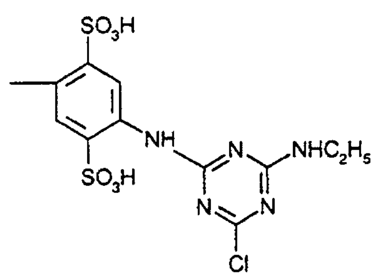

93

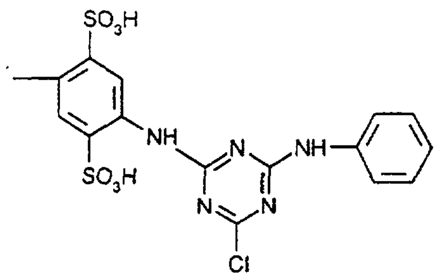

94

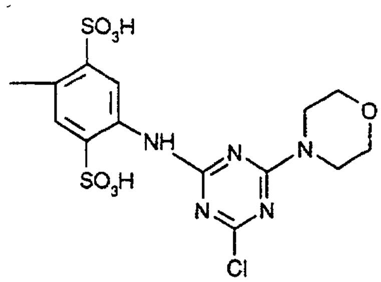

95

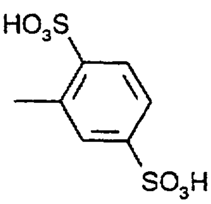

96

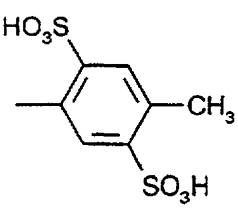

97

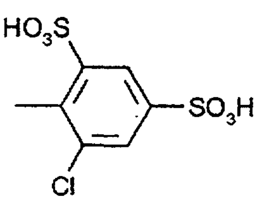

98 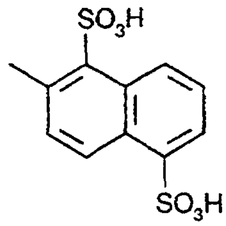

99 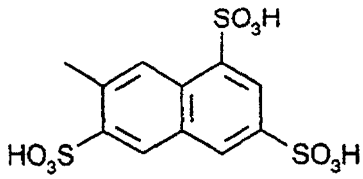

100 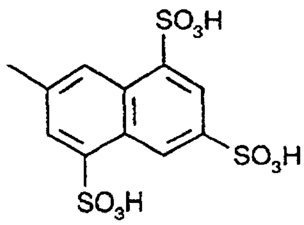

101 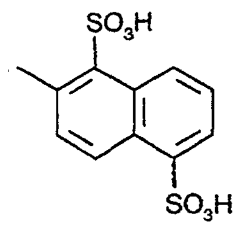

Verfährt man wie in einem der Beispiele 79 bis 101 angegeben, verwendet jedoch anstelle von 44,4 Teilen 1,2-Diaminopropan eine äquimolare Menge eines der nachstehenden Diamine, so erhält man analoge Farbstoffe:

Diamin

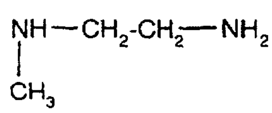

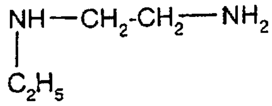

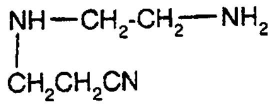

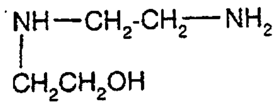

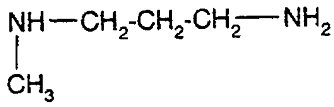

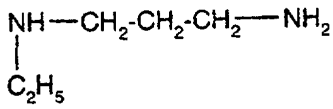

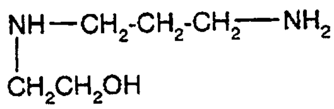

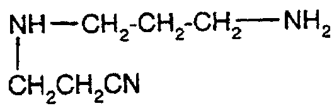

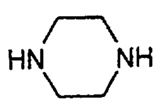

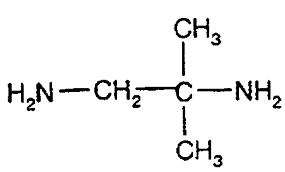

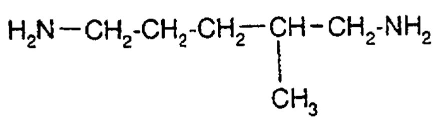

$H_2N-(CH_2)_2-O-(CH_2)_2-O-(CH_2)_2-NH_2$

Färbevorschrift

2 Teile des gemäss Beispiel 1 erhaltenen Reaktivfarbstoffes werden in 400 Teilen Wasser gelöst; dazu gibt man 1500 Teile einer Lösung, die pro Liter 53 g Natriumchlorid enthält. In dieses Färbebad geht man bei 40 °C mit 100 Teilen Baumwollgewebe ein. Nach 45 Minuten werden 100 Teile einer Lösung, die pro Liter 16 g Natriumhydroxyd und 20 g kalziniertes Soda enthält, zugegeben. Die Temperatur des Färbebades wird weitere 45 Minuten bei 40 °C gehalten. Danach wird die gefärbte Ware gespült, während einer Viertelstunde mit einem nichtionogenen Waschmittel kochend geseift, nochmals gespült und getrocknet.

Druckvorschrift

3 Teile der gemäss Beispiel 1 erhaltenen Reaktivfarbstoffes werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitro-benzolsulfon-saures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102 °C in gesättigtem Dampf. Das bedruckte Gewebe wird dann gespült, gegebenenfalls kochend geseift und nochmals gespült, und anschliessend getrocknet.

## Patentansprüche

**1.** Reaktivfarbstoffe der Formel

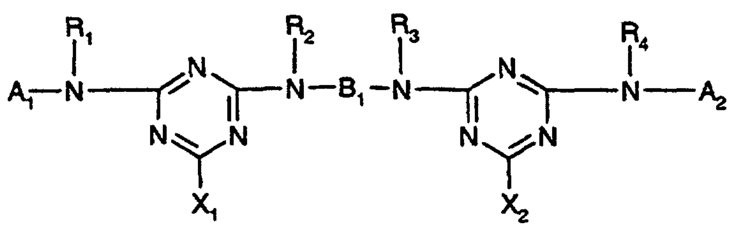

(1),

worin

$R_1$, $R_2$, $R_3$ und $R_4$ unabhängig voneinander Wasserstoff oder gegebenenfalls durch Hydroxy, Sulfo, Sulfato, Cyano oder Carboxy substituiertes $C_1$-$C_4$-Alkyl,
$X_1$ und $X_2$ Halogen sind,
$B_1$ ein aromatisches oder aliphatisches Brückenglied ist oder der Rest der Formel -N($R_2$)-$B_1$-N($R_3$)- einen Piperazinrest darstellt,
$A_1$ der Rest eines Monoazo-, Polyazo-, Metallkomplexazo-, Anthrachinon-, Phthalocyanin-, Formazan- oder Dioxazin-Chromophors und
$A_2$ ein Rest der Formel

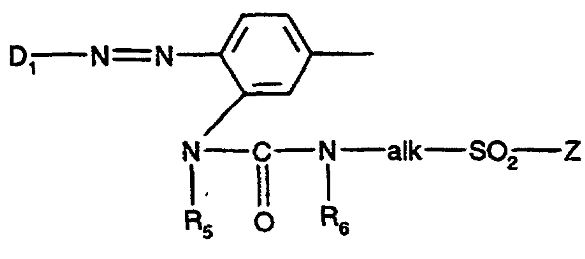

(2)

ist,
wobei
$D_1$ gegebenenfalls durch $C_1$-$C_4$-Alkyl, $C_1$-$C_4$-Alkoxy, $C_2$-$C_4$-Alkanoylamino, Sulfo, Halogen, Carboxy oder einen faserreaktiven Rest substituiertes Phenyl oder Naphthyl ist,
$R_5$ und $R_6$ unabhängig voneinander Wasserstoff oder gegebenenfalls durch Hydroxy, Sulfo, Sulfato, Cyano oder Carboxy substituiertes $C_1$-$C_4$-Alkyl sind,
alk $C_2$-$C_6$-Alkylen und
Z Vinyl oder einen Rest $-CH_2-CH_2-U_1$ bedeutet und $U_1$ eine Abgangsgruppe ist, und
die Reste $A_1$ und $A_2$ voneinander verschiedene Bedeutungen haben.

**2.** Reaktivfarbstoffe gemäss Anspruch 1, **dadurch gekennzeichnet, dass** $R_1$, $R_4$, $R_5$ und $R_6$ Wasserstoff sind.

**3.** Reaktivfarbstoffe gemäss einem der Ansprüche 1 und 2, **dadurch gekennzeichnet, dass** $X_1$ und $X_2$ Chlor oder Fluor sind.

**4.** Reaktivfarbstoffe gemäss einem der Ansprüche 1 bis 3, **dadurch gekennzeichnet, dass** $B_1$ ein $C_2$-$C_{12}$-Alkylenrest ist, welcher durch 1, 2 oder 3 Glieder aus der Gruppe -NH-, $-N(CH_3)-$ oder -O- unterbrochen sein kann und unsubstituiert oder durch Hydroxy, Sulfo, Sulfato, Cyano oder Carboxy substituiert ist; oder ein gegebenenfalls durch $C_1$-$C_4$-Alkyl, $C_1$-$C_4$-Alkoxy, $C_2$-$C_4$-Alkanoylamino, Sulfo, Halogen oder Carboxy substituierter $C_5$-$C_9$-Cycloalkylenrest, $C_1$-$C_6$-Alkylenphenylenrest oder Phenylenrest; oder ein Rest der Formel

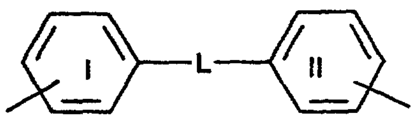

(3)

ist, worin die Benzolringe I und II gegebenenfalls durch $C_1$-$C_4$-Alkyl, $C_1$-$C_4$-Alkoxy, $C_2$-$C_4$-Alkanoylamino, Sulfo, Halogen oder Carboxy substituiert sind und L die direkte Bindung oder ein $C_2$-$C_{10}$-Alkylenrest ist, welcher durch 1, 2 oder 3 Sauerstoffatome unterbrochen sein kann, oder L ein Brückenglied der Formel -CH=CH-, -N=N-, -NH-, -CO-, -NH-CO-, -NH-CO-NH-, -O-, -S- oder $-SO_2-$ ist;.oder der Rest der Formel $-N(R_2)-B_1-N(R_3)-$ einen Piperazinrest der Formel

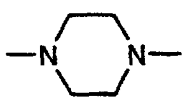

darstellt.

**5.** Reaktivfarbstoffe gemäss einem der Ansprüche 1 bis 4, **dadurch gekennzeichnet, dass** $B_1$ ein $C_2$-$C_{12}$-Alkylenrest ist, welcher durch 1, 2 oder 3 Glieder -O- unterbrochen sein kann und unsubstituiert oder durch Hydroxy substituiert ist.

**6.** Reaktivfarbstoffe gemäss einem der Ansprüche 1 bis 5, **dadurch gekennzeichnet, dass** $B_1$ ein Rest der Formel $-CH_2-CH(R_7)-$ oder $-(R_7)-CH-CH_2-$ ist, worin $R_7$ $C_1$-$C_4$-Alkyl, insbesondere Methyl, bedeutet.

**7.** Reaktivfarbstoffe gemäss einem der Ansprüche 1 bis 6, **dadurch gekennzeichnet, dass** alk ein $C_2$-$C_3$-Alkylenrest und Z Vinyl oder ein Rest der Formel $-CH_2-CH_2-OSO_3H$ ist.

**8.** Reaktivfarbstoffe gemäss einem der Ansprüche 1 bis 7, **dadurch gekennzeichnet, dass** $A_1$ ein Rest der Formel

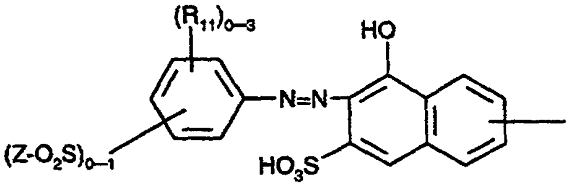

(8a),

worin $(R_{11})_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht und Z die in Anspruch 1 angegebene Bedeutung hat,

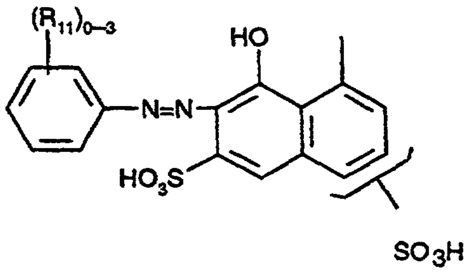

(8b),

worin $(R_{11})_{0-3}$ die zuvor angegebene Bedeutung hat,

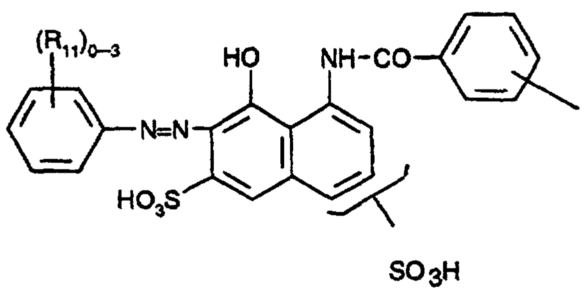

(8c),

worin $(R_{11})_{0-3}$ die zuvor angegebene Bedeutung hat,

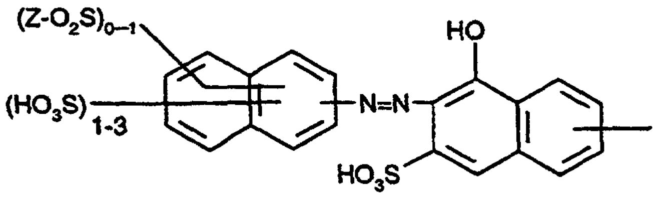

(8d),

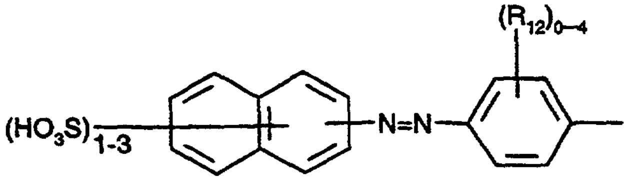

(8e),

worin $(R_{12})_{0-4}$ für 0 bis 4 gleiche oder verschiedene Substituenten aus der Gruppe Halogen, Nitro, Cyan, Trifluormethyl, Sulfamoyl, Carbamoyl, $C_1$-$C_4$-Alkyl, $C_1$-$C_4$-Alkoxy, Amino, Acetylamino, Ureido, Hydroxy, Carboxy, Sulfomethyl und Sulfo steht und Z die in Anspruch 1 angegebene Bedeutung hat,

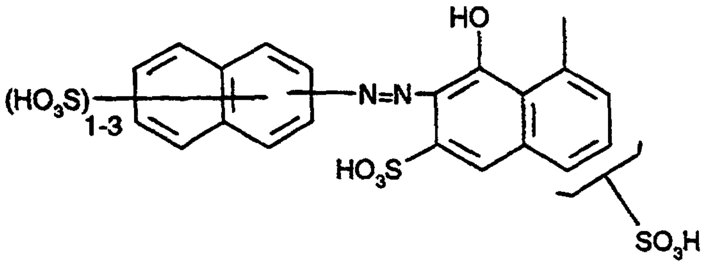

(8f),

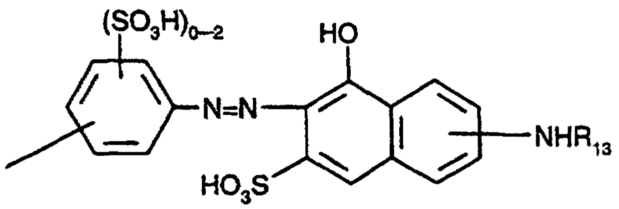

(8g),

worin $R_{13}$ $C_1$-$C_4$-Alkanoyl, Benzoyl oder ein gegebenenfalls weitersubstituierter Halogentriazinylrest ist,

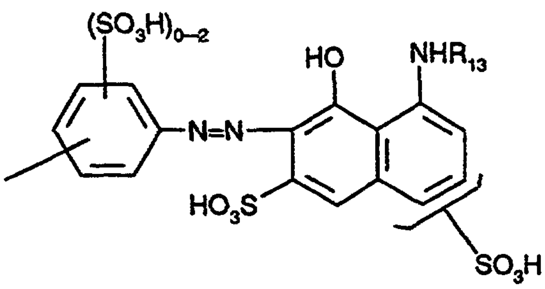

(8h),

worin $R_{13}$ $C_1$-$C_4$-Alkanoyl, Benzoyl oder ein gegebenenfalls weitersubstituierter Halogentriazinylrest ist,

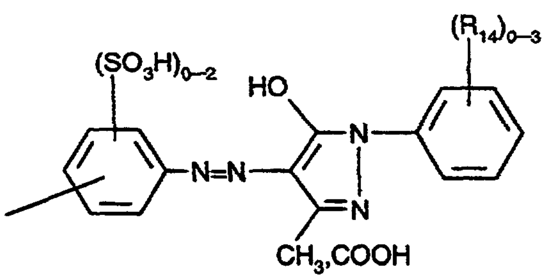

(8i),

worin $(R_{14})_{0-3}$ für 0 bis 3 gleiche oder verschiedene Substituenten aus der Gruppe $C_1$-$C_4$-Alkyl, $C_1$-$C_4$-Alkoxy, Halogen, Carboxy und Sulfo steht,

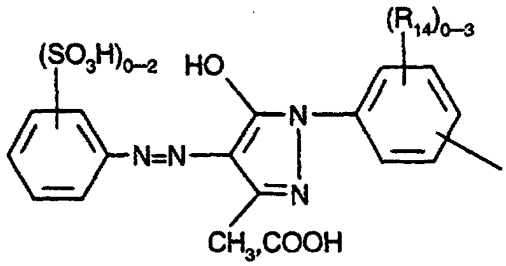

(8j),

worin $(R_{14})_{0\text{-}3}$ die oben angegebene Bedeutung hat,

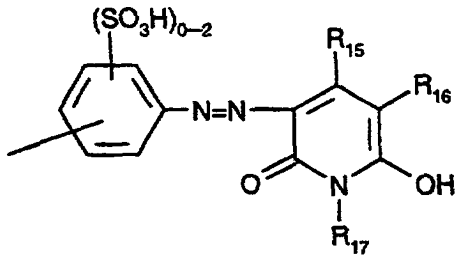

(8k),

worin $R_{15}$ und $R_{17}$ unabhängig voneinander Wasserstoff, $C_1$-$C_4$-Alkyl oder Phenyl, und $R_{16}$ Wasserstoff, Cyano, Carbamoyl oder Sulfomethyl ist,

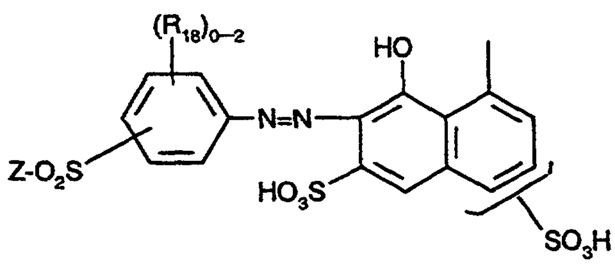

(8l),

worin $(R_{18})_{0\text{-}2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht; und Z die in Anspruch 1 angegebene Bedeutung hat,

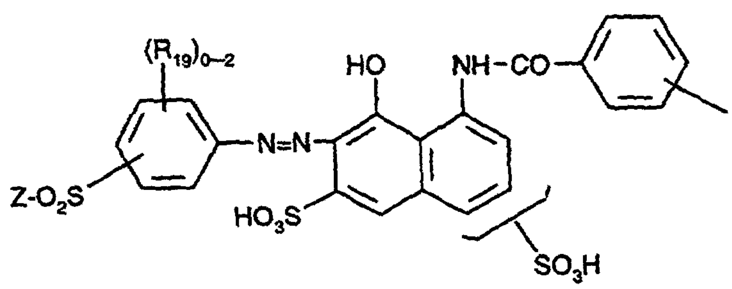

(8m),

worin $(R_{19})_{0\text{-}2}$ für 0 bis 2 gleiche oder verschiedene Substituenten aus der Gruppe $C_1$-$C_4$-Alkyl, $C_1$-$C_4$-Alkoxy, Halogen, Carboxy und Sulfo steht und Z die im Anspruch 1 angegebene Bedeutung hat,

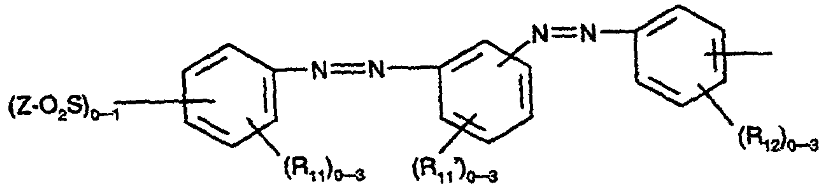

(8n)

oder

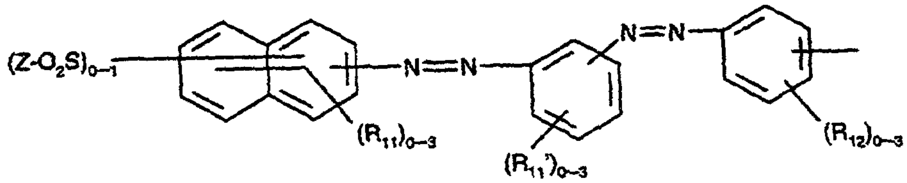

(8o)

oder

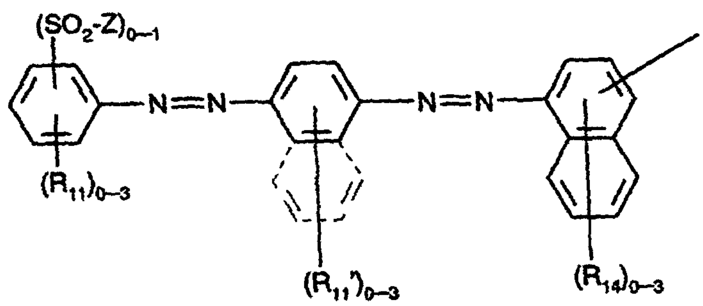

(8p)

oder

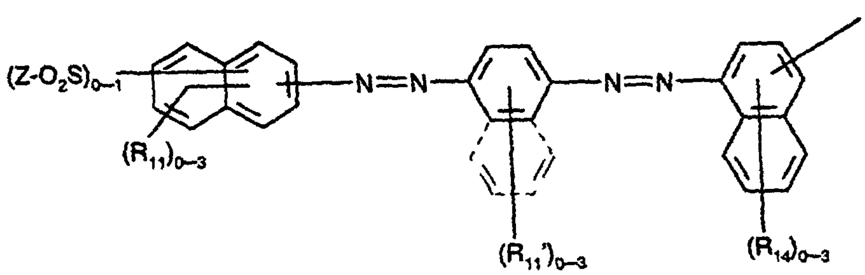

(8q),

worin $(R_{11})_{0\text{-}3}$, $(R_{12})_{0\text{-}3}$, $(R_{14})_{0\text{-}3}$ und Z jeweils die oben angegebene Bedeutung haben und $(R_{11}')_{0\text{-}3}$ für 0 bis 3 gleiche oder verschiedene Substituenten aus der Gruppe $C_1$-$C_4$-Alkyt, $C_1$-$C_4$-Alkoxy, Halogen, Carboxy oder Sulfo steht,

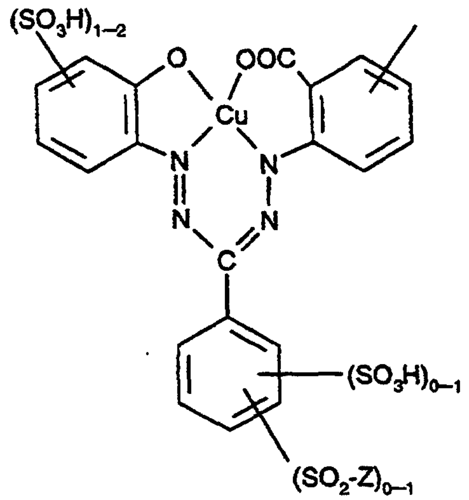

(8r)

oder

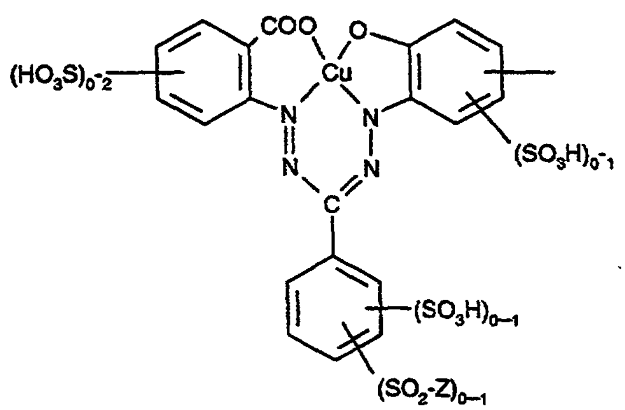

(8s),

worin Z die oben angegebene Bedeutung hat und die Benzolkeme keine weiteren Substituenten enthalten oder durch $C_1$-$C_4$-Alkyl, $C_1$-$C_4$-Alkoxy, $C_1$-$C_4$-Alkylsulfonyl, Halogen oder Carboxy weitersubstituiert sind,

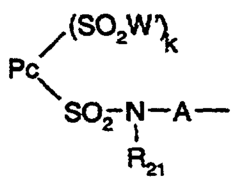

(9),

worin Pc der Rest eines Metallphthalocyanins, insbesondere der Rest eines Kupfer- oder Nickelphthalocyanins; W' -OH und/oder $-NR_{20}R_{20}'$; $R_{20}$ und $R_{20}'$ unabhängig voneinander Wasserstoff oder gegebenenfalls durch Hydroxy oder Sulfo substituiertes $C_1$-$C_4$-Alkyl; $R_{21}$ Wasserstoff oder $C_1$-$C_4$-Alkyl; A ein gegebenenfalls durch $C_1$-$C_4$-Alkyl, Halogen, Carboxy oder Sulfo substituierter Phenylenrest oder ein $C_2$-$C_6$-Alkylenrest; und k 1 bis 3 ist,

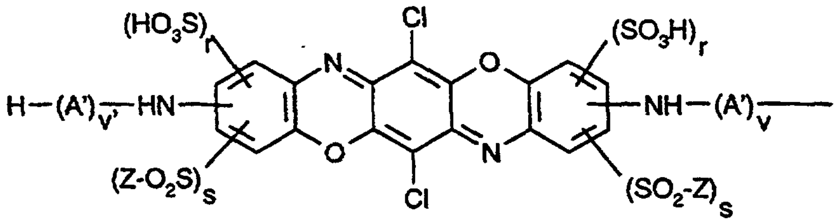

(10),

worin A' ein gegebenenfalls durch $C_1$-$C_4$-Alkyl, Halogen, Carboxy oder Sulfo substituierter Phenylenrest oder ein $C_2$-$C_6$-Alkylenrest ist, r, s, v und v' unabhängig voneinander je die Zahl 0 oder 1 bedeuten und Z die zuvor angegebene Bedeutung hat, oder

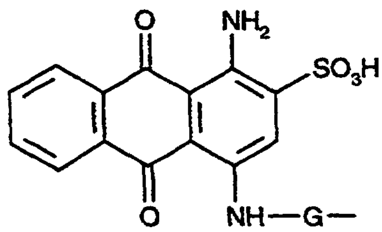

(11),

worin G einen unsubstituierten oder durch $C_1$-$C_4$-Alkyl, $C_1$-$C_4$-Alkoxy, Halogen, Carboxy oder Sulfo substituierten Phenylenrest oder einen Cyclohexylen-, Phenylenmethylen- oder $C_2$-$C_6$-Alkylenrest bedeutet, ist.

**9.** Reaktivfarbstoffe gemäss Anspruch 8, **dadurch gekennzeichnet, dass** $A_1$ ein Rest der Formeln (8a) bis (8q) oder ein Rest der Formel (11) ist

**10.** Reaktivfarbstoffe gemäss einem der Ansprüche 1 bis 9, **dadurch gekennzeichnet, dass** einer der Reste $R_2$ und $R_3$ durch Hydroxy, Sulfo, Sulfato, Cyano oder Carboxy substituiertes $C_1$-$C_4$-Alkyl ist und der andere der Reste $R_2$ und $R_3$ Wasserstoff oder $C_1$-$C_4$-Alkyl ist

**11.** Reaktivfarbstoffe gemäss einem der Ansprüche 8 und 9, **dadurch gekennzeichnet, dass** $R_1$, $R_2$, $R_3$, $R_4$, $R_5$ und $R_6$ Wasserstoff,

$X_1$ und $X_2$ Chlor oder insbesondere Fluor sind,
$B_1$ ein Rest der Formel $-CH_2-CH(R_7)-$ oder $-(R_7)-CH-CH_2-$ ist, worin $R_7$ $C_1$-$C_4$-Alkyl bedeutet, alk ein $C_2$-$C_3$-Alkylenrest,
Z Vinyl oder ein Rest der Formel $-CH_2-CH_2-OSO_3H$, und
$D_1$ unsubstituiertes oder durch $C_1$-$C_4$-Alkyl, $C_1$-$C_4$-Alkoxy, $C_2$-$C_4$-Alkanoylamino, Sulfo, Halogen, Carboxy oder einen faserreaktiven Rest substituiertes Phenyl oder Naphthyl ist.

**12.** Verfahren zur Herstellung von Reaktivfarbstoffen gemäss Anspruch 1, **dadurch gekennzeichnet, dass** man eine Verbindung der Formel

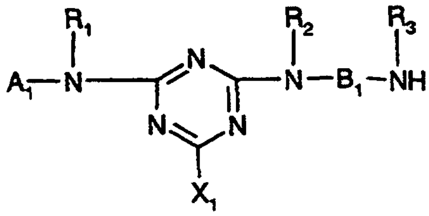

(12a)

mit einer Verbindung der Formel

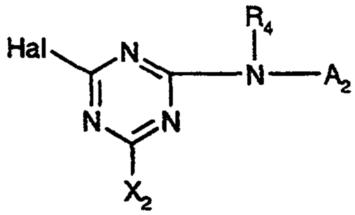

(13a),

oder eine Verbindung der Formel

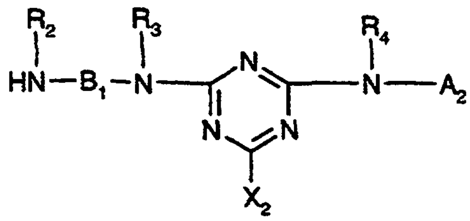

(12b)

mit einer Verbindung der Formel

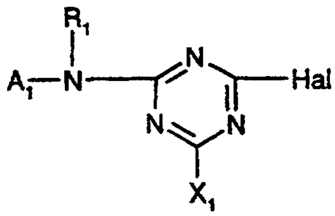

(13b)

kondensiert, wobei Hal Halogen bedeutet und $A_1$, $A_2$, $B_1$, $X_1$, $X_2$, $R_1$, $R_2$, $R_3$ und $R_4$ die in Anspruch 1 angegebenen Bedeutungen haben.

13. Verwendung der Reaktivfarbstoffe gemäss einem der Ansprüche 1 bis 11 bzw. der gemäss Anspruch 12 erhaltenen Reaktivfarbstoffe zum Färben oder Bedrucken von hydroxygruppenhaltigen oder stickstoffhaltigen Fassermaterialien.

## Claims

1. A reactive dye of the formula

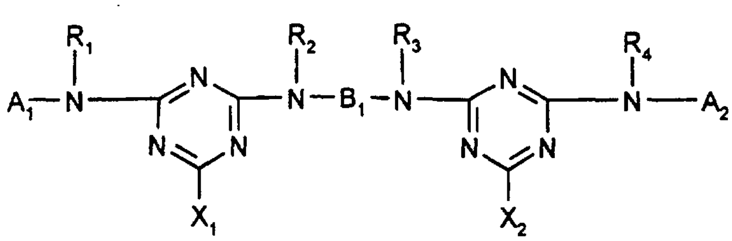

(1),

in which

$R_1$, $R_2$, $R_3$ and $R_4$ independently of one another are hydrogen or $C_1$-$C_4$alkyl which is unsubstituted or substituted by hydroxyl, sulfo, sulfato, cyano or carboxyl,
$X_1$ and $X_2$ are halogen,
$B_1$ is an aromatic or aliphatic bridge member, or the radical of the formula -N($R_2$)-$B_1$-N($R_3$)- is a piperazine radical,
$A_1$ is the radical of a monoazo, polyazo, metal complex azo, anthraquinone, phthalocyanine, formazan or dioxazine chromophore and,
$A_2$ is a radical of the formula

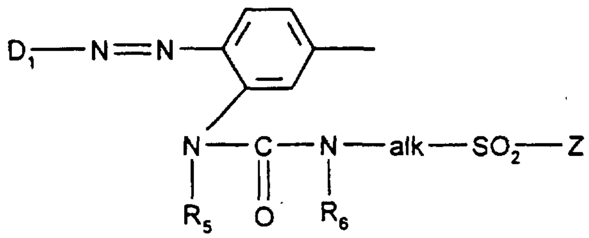

(2),

in which
$D_1$ is phenyl or naphthyl which is unsubstituted or substituted by $C_1$-$C_4$alkyl, $C_1$-$C_4$alkoxy, $C_2$-$C_4$alkonoylamino, sulfo, halogen, carboxyl or a fibre-reactive radical,
$R_5$ and $R_6$ independently of one another are hydrogen or $C_1$-$C_4$ alkyl which is unsubstituted or substituted by hydroxyl, sulfo, sulfato, cyano or carboxyl,
alk is $C_2$-$C_6$alkylene and
Z is vinyl or a radical -$CH_2$-$CH_2$-$U_1$, and $U_1$ is a leaving group, and
the radicals $A_1$ and $A_2$ differ from one another.

2. A reactive dye according to claim 1, wherein $R_1$, $R_4$, $R_5$ and $R_6$ are hydrogen.

3. A reactive dye according to any one of claims 1 and 2, wherein $X_1$ and $X_2$ are chlorine or fluorine.

4. A reactive dye according to any one claims 1 to 3, wherein

$B_1$ is a $C_2$-$C_{12}$alkylene radical, which can be interrupted by 1, 2 or 3 members from the group consisting of -NH-, -N($CH_3$)- or -O- and is unsubstituted or substituted by hydroxyl, sulfo, sulfato, cyano or carboxyl; or a $C_5$-$C_9$cycloalkylene radical, $C_1$-$C_6$alkylenephenylene radical or phenylene radical which are unsubstituted or substituted by $C_1$-$C_4$alkyl, $C_1$-$C_4$alkoxy, $C_2$-$C_4$alkanoylamino, sulfo, halogen or carboxyl; or a radical of the formula

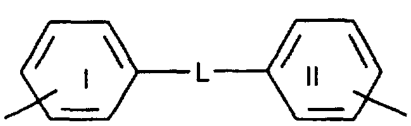

(3)

in which
the benzene rings I and II are unsubstituted or substituted by $C_1$-$C_4$alkyl, $C_1$-$C_4$alkoxy, $C_2$-$C_4$alkanoylamino, sulfo, halogen or carboxyl and
L is a direct bond or a $C_2$-$C_{10}$alkylene radical, which can be interrupted by 1, 2 or 3 oxygen atoms, or
L is a bridge member of the formula -CH=CH-, -N=N-, -NH-, -CO-, -NH-CO-, - NH-CO-NH-, -O-, -S- or -$SO_2$-; or the radical of the formula -N($R_2$)-$B_1$-N($R_3$)- is a piperazine radical of the formula

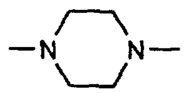

**5.** A reactive dye according to any one of claims 1 to 4, wherein $B_1$ is a $C_2$-$C_{12}$alkylene radical, which can be interrupted by 1, 2 or 3 members -O- and is unsubstituted or substituted by hydroxyl.

**6.** A reactive dye according to any one of claims 1 to 5, wherein

$B_1$ is a radical of the formula $-CH_2-CH(R_7)-$ or $-(R_7)-CH-CH_2-$, in which
$R_7$ is $C_1$-$C_4$alkyl, in particular methyl.

**7.** A reactive dye according to any one of claims 1 to 6, wherein

alk is a $C_2$-$C_3$alkylene radical and
Z is vinyl or a radical of the formula $-CH_2-CH_2-OSO_3H$.

**8.** A reactive dye according to any one of claims 1 to 7, wherein

$A_1$ is a radical of the formula

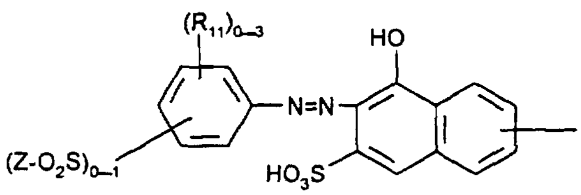

(8a),

in which
$(R_{11})_{0\text{-}3}$ is 0 to 3 identical or different substituents from the group consisting of $C_1$-$C_4$alkyl, $C_1$-$C_4$alkoxy, halogen, carboxyl and sulfo and
Z is as defined in claim 1,

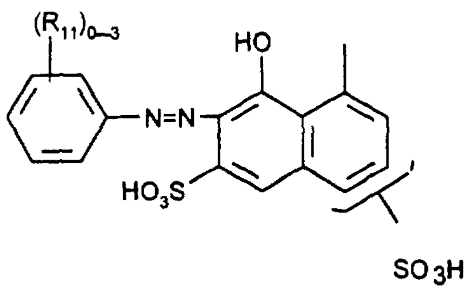

(8b),

in which
$(R_{11})_{0\text{-}3}$ is as defined above,

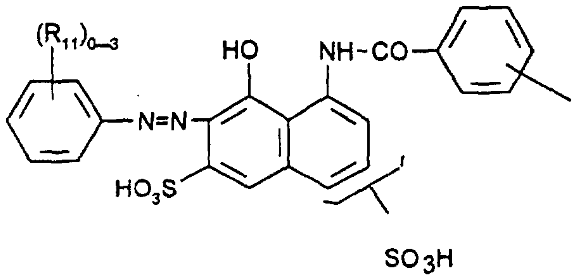

(8c),

in which
$(R_{11})_{0-3}$ is as defined above,

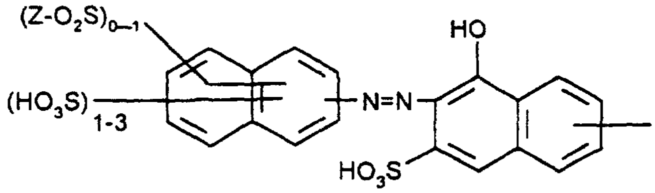

(8d),

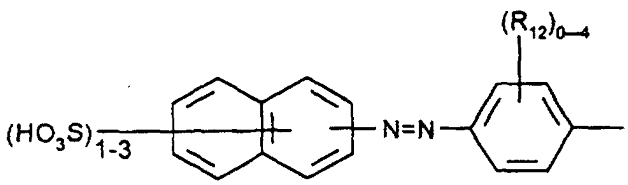

(8e),

in which
$(R_{12})_{0-4}$ is 0 to 4 identical or different substituents from the group consisting of halogen, nitro, cyano, trifluoromethyl, sulfamoyl, carbamoyl, $C_1$-$C_4$alkyl, $C_1$-$C_4$alkoxy, amino, acetylamino, ureido, hydroxyl, carboxyl, sulfomethyl and sulfo and
Z is as defined in claim 1,

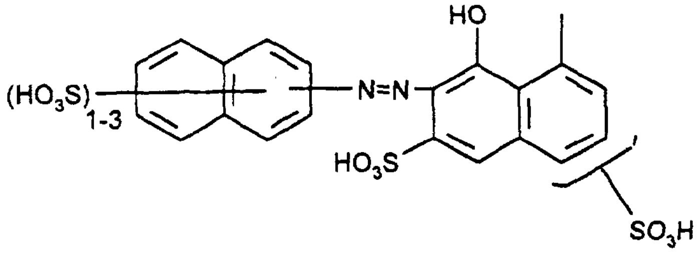

(8f),

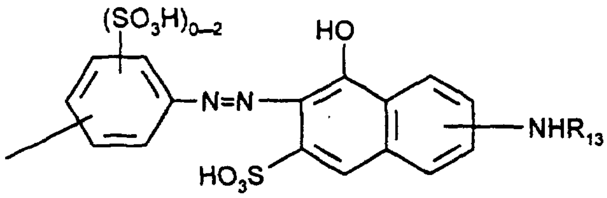

(8g),

in which
$R_{13}$ is $C_1$-$C_4$alkanoyl, benzoyl or a halotriazinyl radical which is unsubstituted or further substituted,

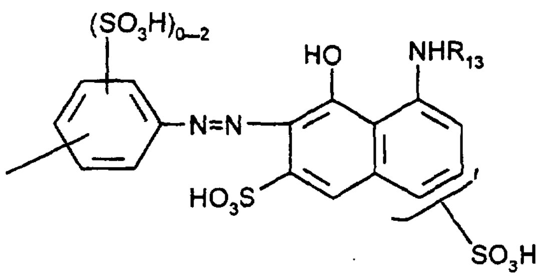 (8h),

in which
$R_{13}$ is $C_1$-$C_4$alkanoyl, benzoyl or a halotriazinyl radical which is unsubstituted or further substituted,

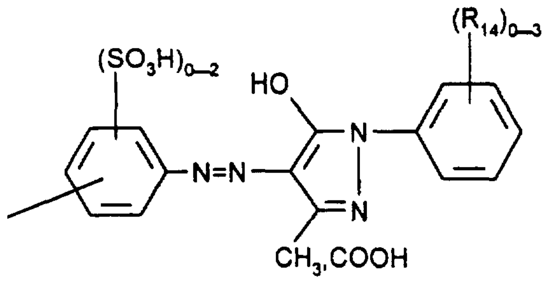 (8i),

in which
$(R_{14})_{0-3}$ is 0 to 3 identical or different substituents from the group consisting of $C_1$-$C_4$alkyl, $C_1$-$C_4$alkoxy, halogen, carboxyl and sulfo,

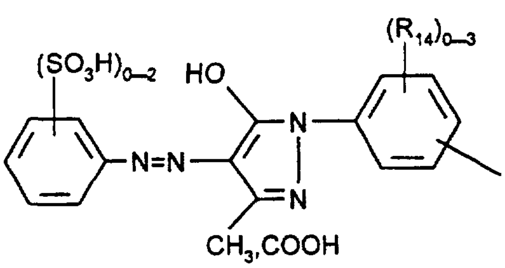 (8j),

in which
$(R_{14})_{0-3}$ is as defined above,

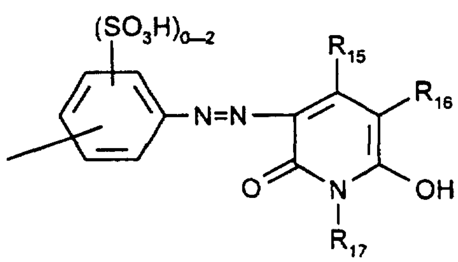 (8k),

in which
$R_{15}$ and $R_{17}$ independently of one another are hydrogen, $C_1$-$C_4$alkyl or phenyl, and
$R_{16}$ is hydrogen, cyano, carbamoyl or sulfomethyl,

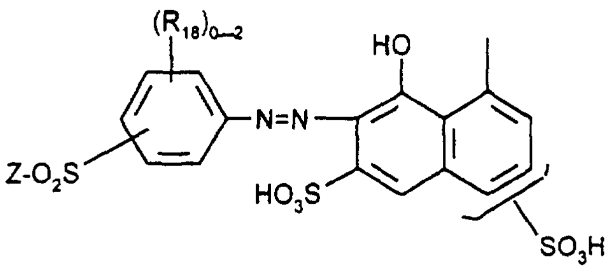

(8l),

in which
$(R_{18})_{0-2}$ is 0 to 2 identical or different substituents from the group consisting of $C_1$-$C_4$alkyl, $C_1$-$C_4$alkoxy, halogen, carboxyl and sulfo, and
Z is as defined in claim 1,

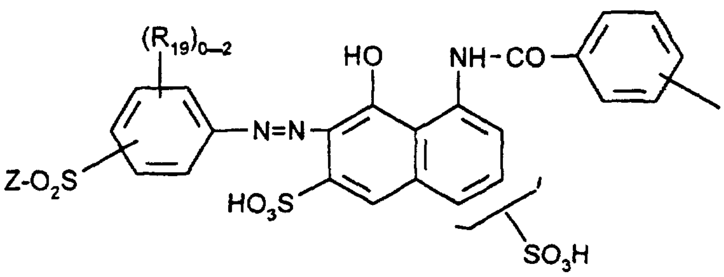

(8m),

in which
$(R_{19})_{0-2}$ is 0 to 2 identical or different substituents from the group consisting of $C_1$-$C_4$alkyl, $C_1$-$C_4$alkoxy, halogen, carboxyl and sulfo; and
Z is as defined in claim 1,

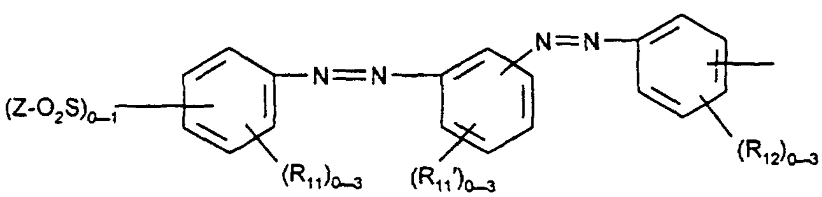

(8n)

or

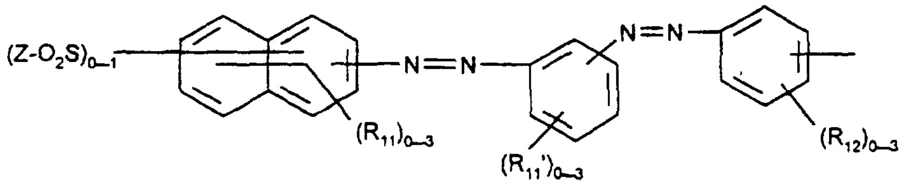

(8o)

or

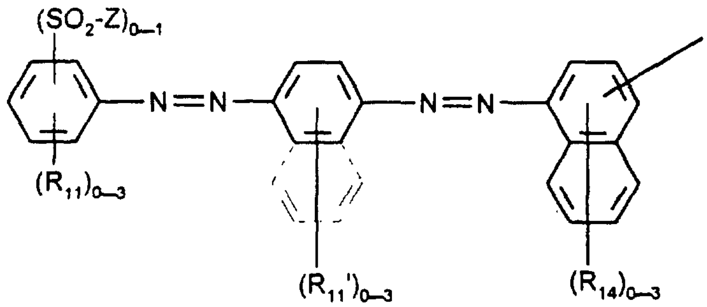

(8p)

or

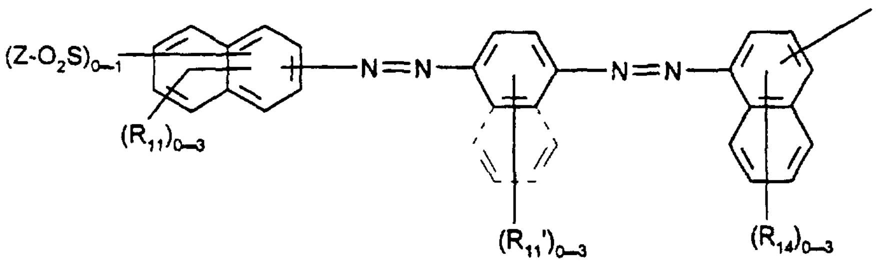

(8q),

in which
$(R_{11})_{0-3}$, $(R_{12})_{0-3}$, $(R_{14})_{0-3}$ and Z are in each case as defined above and
$(R_{11}')_{0-3}$ is 0 to 3 identical or different substituents from the group consisting of $C_1$-$C_4$alkyl, $C_1$-$C_4$alkoxy, halogen, carboxyl and sulfo,

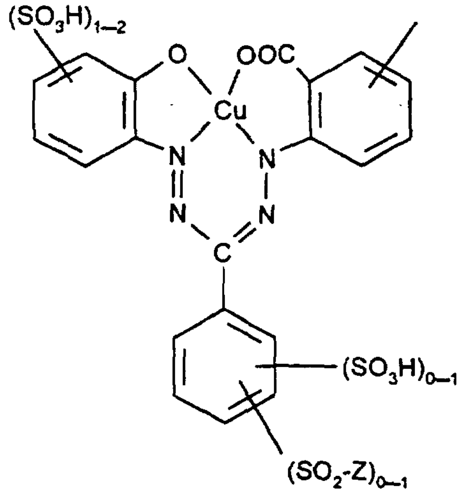

(8r)

or

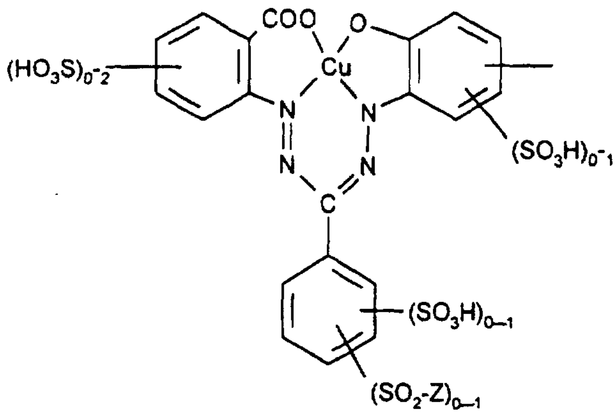

(8s),

in which
Z is as defined above and
the benzene nuclei contain no further substituents or are further substituted by $C_1$-$C_4$alkyl, $C_1$-$C_4$alkoxy, $C_1$-$C_4$alkylsulfonyl, halogen or carboxyl,

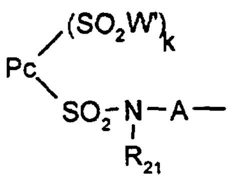

(9),

in which
Pc is the radical of a metal phthalocyanine, in particular the radical of a copper or nickel phthalocyanine;
W' is -OH and/or $-NR_{20}R_{20}'$;
$R_{20}$ and $R_{20}'$ independently of one another are hydrogen or $C_1$-$C_4$alkyl which is unsubstituted or substituted by hydroxyl or sulfo;
$R_{21}$ is hydrogen or $C_1$-$C_4$alkyl;
A is a phenylene radical which is unsubstituted or substituted by $C_1$-$C_4$alkyl, halogen, carboxyl or sulfo, or a $C_2$-$C_6$alkylene radical; and
k is 1 to 3,

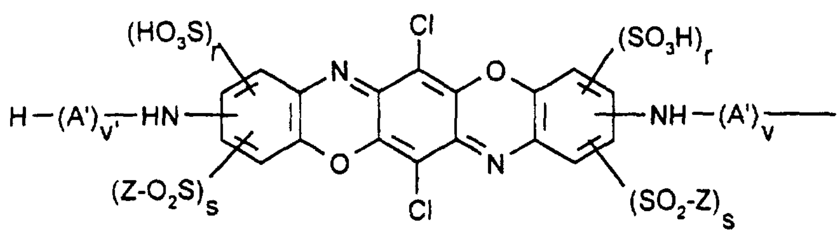

(10),

in which
A' is a phenylene radical which is unsubstituted or substituted by $C_1$-$C_4$alkyl, halogen, carboxyl or sulfo, or a $C_2$-$C_6$alkylene radical,
r, s, v and v' independently of one another are each the number 0 or 1 and
Z is as defined above, or

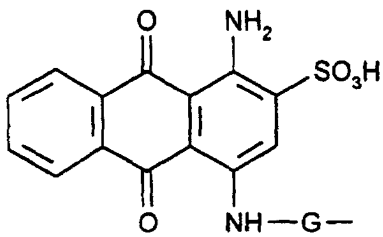

(11),

in which

G is a phenylene radical which is unsubstituted or substituted by $C_1$-$C_4$alkyl, $C_1$-$C_4$alkoxy, halogen, carboxyl or sulfo, or a cyclohexylene, phenylenemethylene or $C_2$-$C_6$alkylene radical.

**9.** A reactive dye according to claim 8, wherein
$A_1$ is a radical of the formulae (8a) to (8q) or a radical of the formula (11).

**10.** A reactive dye according to any one of claims 1 to 9, wherein

one of the radicals $R_2$ and $R_3$ is $C_1$-$C_4$alkyl which is substituted by hydroxyl, sulfo, sulfato, cyano or carboxyl and the other of the radicals $R_2$ and $R_3$ is hydrogen or $C_1$-$C_4$alkyl.

**11.** A reactive dye according to any one of claims 8 and 9, wherein

$R_1$, $R_2$, $R_3$, $R_4$, $R_5$ and $R_6$ are hydrogen,
$X_1$ and $X_2$ are chlorine or, in particular, fluorine,
$B_1$ is a radical of the formula $-CH_2-CH(R_7)-$ or $-(R_7)-CH-CH_2-$, in which
$R_7$ is $C_1$-$C_4$alkyl,
alk is a $C_2$-$C_3$alkylene radical,
Z is vinyl or a radical of the formula $-CH_2-CH_2-OSO_3H$, and
$D_1$ is phenyl or naphthyl which are unsubstituted or substituted by $C_1$-$C_4$alkyl, $C_1$-$C_4$alkoxy, $C_2$-$C_4$alkanoylamino, sulfo, halogen, carboxyl or a fibre-reactive radical.

**12.** A process for the preparation of a reactive dye according to claim 1, which comprises subjecting a compound of the formula

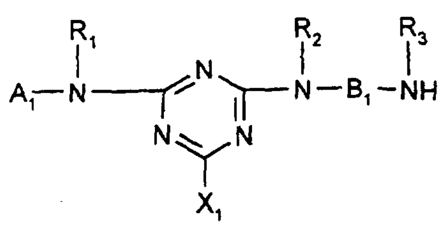

(12a)

to a condensation reaction with a compound of the formula

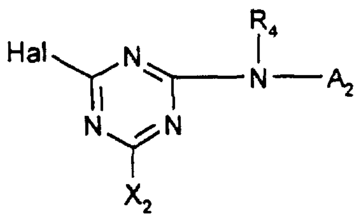

(13a),

or subjecting a compound of the formula

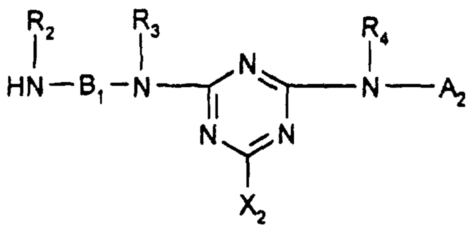

(12b)

to a condensation reaction with a compound of the formula

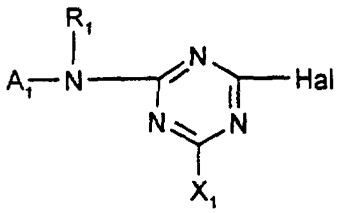

(13b)

in which

Hal is halogen, and
$A_1$, $A_2$, $B_1$, $X_1$, $X_2$, $R_1$, $R_2$, $R_3$ and $R_4$ are as defined in claim 1.

**13.** The use of a reactive dye according to any one of claims 1 to 11 or a reactive dye obtained according to claim 12 for dyeing or printing fibre materials containing hydroxyl groups or containing nitrogen.

**Revendications**

**1.** Colorants réactifs de formule

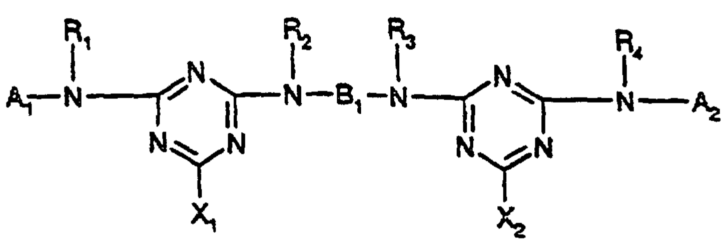

(1),

où

$R_1$, $R_2$, $R_3$ et $R_4$ représentent, indépendamment les uns des autres, des atomes d'hydrogène ou des groupes alkyle en $C_1$-$C_4$ éventuellement substitué par des substituants hydroxy, sulfo, sulfato, cyano ou carboxy,
$X_1$ et $X_2$ représentent des atomes d'halogènes,
$B_1$ représente un élément de pontage aromatique ou aliphatique ou le reste de formule -N($R_2$)-$B_1$-N($R_3$)- représente un reste pipérazine,
$A_1$ représente le reste d'un chromophore monoazoïque, polyazoïque, à complexe métallifère, d'anthraquinone, de phtalocyanine, de formazane ou de dioxazine,
$A_2$ représente un reste de formule

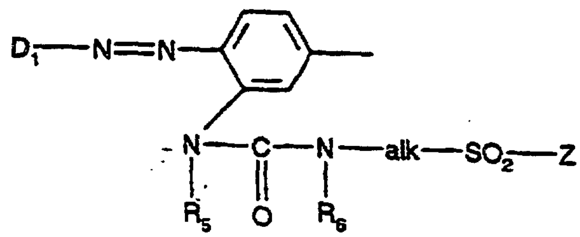

(2),

$D_1$ représentant des groupes phényle ou naphtyle éventuellement substitué par des substituants alkyle en $C_1$-$C_4$, alkoxy en $C_1$-$C_4$, (alcanoyl en $C_2$-$C_4$)amino, sulfo,
halogène, carboxy ou un reste réactif sur la fibre,
$R_5$ et $R_6$ représentent, indépendamment l'un de l'autre,
un atome d'hydrogène ou un groupe alkyle en $C_1$-$C_4$ éventuellement substitué par des substituants hydroxy, sulfo, sulfato, cyano ou carboxy,
alk représente un groupe alkylène en $C_2$-$C_6$ et
Z représente un groupe vinyle ou un reste -$CH_2$-$CH_2$-$U_1$ et $U_1$ est un groupe partant, et les restes $A_1$ et $A_2$ possèdent des significations différents.

2. Colorants réactifs selon la revendication 1, **caractérisés en ce que** $R_1$, $R_4$, $R_5$ et $R_6$ représentent des atomes d'hydrogène.

3. Colorants réactifs selon l'une des revendications 1 et 2, **caractérisés en ce que** $X_1$ et $X_2$ représentent un atome de chlore ou de fluor.

4. Colorants réactifs selon l'une des revendications 1 à 3, **caractérisés en ce que**

$B_1$ représente un reste alkylène en $C_2$-$C_{12}$, qui peut être interrompu par 1, 2 ou 3 chaînons pris dans le groupe comportant -NH-, -N($CH_3$)- ou -O- et qui est non substitué ou substitué par des substituants hydroxy, sulfo, sulfato, cyano ou carboxy ; ou
un un reste cycloalkylène en $C_5$-$C_9$, un reste (alkylène en $C_1$-$C_6$)phénylène ou reste phénylène éventuellement substitué par des substituants alkyle en $C_1$-$C_4$, alkoxy en $C_1$-$C_4$, (alcanoyl en $C_2$-$C_4$)amino, sulfo, halogène ou carboxy, ou un reste de formule

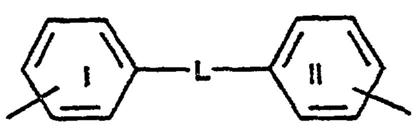

(3)

où les cycles benzène I et II sont éventuellement substitués par des substituants alkyle en $C_1$-$C_4$, alkoxy en $C_1$-$C_4$, (alcanoyl en $C_2$-$C_4$)amino, sulfo, halogène ou carboxy et L représente la liaison directe ou un reste alkylène en $C_2$-$C_{10}$, qui peut être interrompu par 1, 2 ou 3 atomes d'oxygène, ou L représente un élément de pontage de formule -CH=CH-, -N=N-, -NH-, -CO-, -NH-CO-, -NH-CO-NH-, -O-, -S- ou -$SO_2$- ; ou
le reste de formule -N($R_2$)-$B_1$-N($R_3$)- représente un reste pipérazine de formule

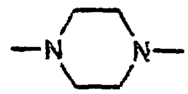

**5.** Colorants réactifs selon l'une des revendications 1 à 4, **caractérisés en ce que** $B_1$ représente un reste alkylène en $C_2$-$C_{12}$, qui peut être interrompu par 1, 2 ou 3 chaînons -O- et qui est non substitué ou substitué par un substituant hydroxy.

**6.** Colorants réactifs selon l'une des revendications 1 à 5, **caractérisés en ce que** $B_1$ représente un reste de formule $-CH_2-CH(R_7)-$ ou $-(R_7)-CH-CH_2-$, où $R_7$ représente un groupe alkyle en $C_1$-$C_4$, en particulier méthyle.

**7.** Colorants réactifs selon l'une des revendications 1 à 6, **caractérisés en ce que** alk représente un reste alkylène en $C_2$-$C_3$ et Z un groupe vinyle ou un reste de formule $-CH_2-CH_2-OSO_3H$.

**8.** Colorants réactifs selon l'une des revendications 1 à 7, **caractérisés en ce que** $A_1$ représente un reste de formule

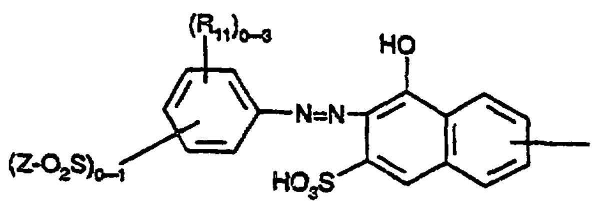

(8a),

où $(R_{11})_{0-3}$ représente 0 à 3 substituants identiques ou différents pris dans le groupe comportant alkyle en $C_1$-$C_4$, alkoxy en $C_1$-$C_4$, halogène, carboxy et sulfo et Z possède la signification donnée à la revendication 1,

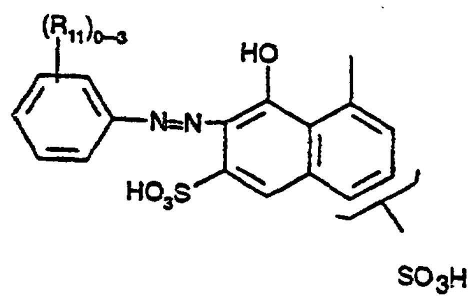

(8b)

où $(R_{11})_{0-3}$ possède la signification donnée auparavant,

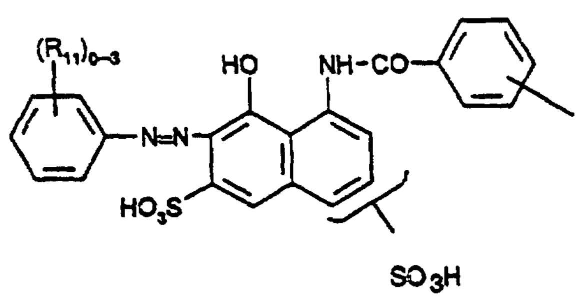

(8c),

où $(R_{11})_{0-3}$ possède la signification donnée auparavant,

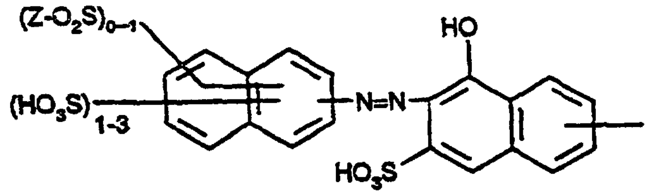

(8d),

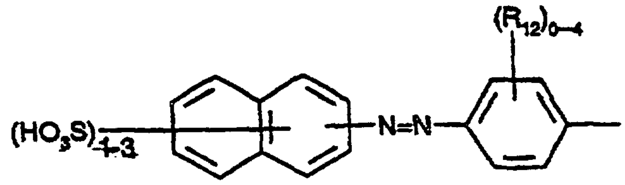

(8e),

où $(R_{12})_{0-4}$ représente 0 à 4 substituants identiques ou différents pris dans le groupe comportant halogène, nitro, alkyle cyano, trifluorométhyle, sulfamoyle, carbamoyle, alkyle en $C_1$-$C_4$, alkoxy en $C_1$-$C_4$, amino, acétylamino, uréido, hydroxy, carboxy, sulfométhyle et sulfo et
Z possède la signification donnée à la revendication 1,

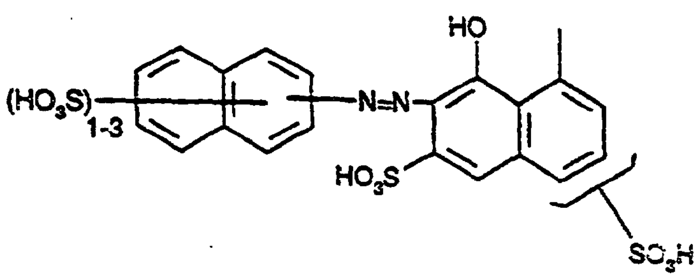

(8f),

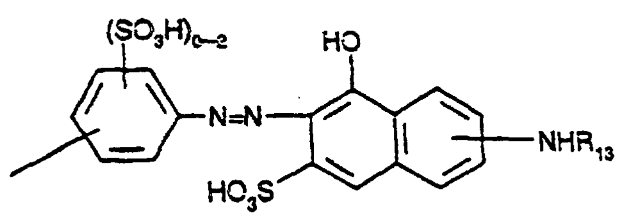

(8g),

où $R_{13}$ représente un groupe alcanoyle en $C_1$-$C_4$, benzoyle ou un reste halogénotriazinyle éventuellement substitué davantage,

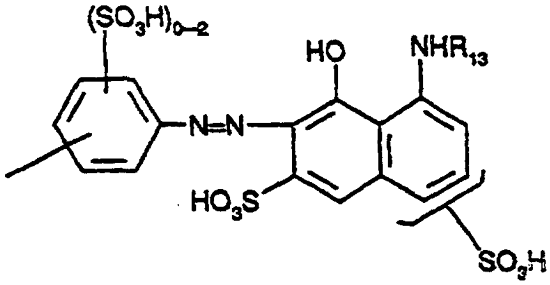

(8h),

où $R_{13}$ représente un groupe alcanoyle en $C_1$-$C_4$, benzoyle ou un reste halogénotriazinyle éventuellement substitué davantage,

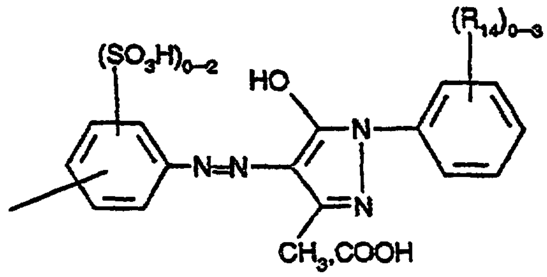

(8i),

où $(R_{14})_{0-3}$ représente 0 à 3 substituants identiques ou différents pris dans le groupe comportant alkyle en $C_1$-$C_4$, alkoxy en $C_1$-$C_4$, halogène, carboxy et sulfo,

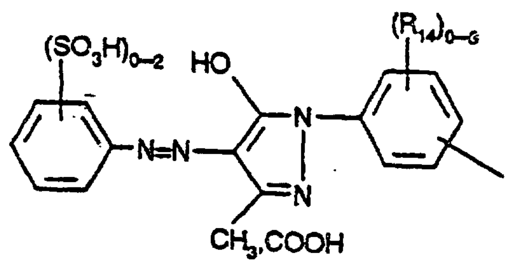

(8j),

où $(R_{14})_{0-3}$ possède la signification donnée ci-dessus,

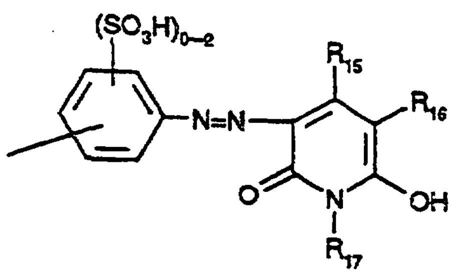

(8k),

où $R_{15}$ et $R_{17}$ représentent, indépendamment l'un de l'autre, un atome d'hydrogène, des groupes alkyle en $C_1$-$C_4$ ou phényle, et $R_{16}$ représente un atome d'hydrogène, des groupes cyano, carbamoyle ou sulfométhyle,

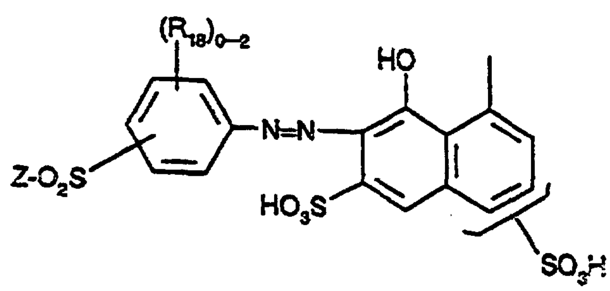

(8l),

où $(R_{18})_{0-2}$ représente 0 à 2 substituants identiques ou différents pris dans le groupe comportant alkyle en $C_1$-$C_4$, alkoxy en $C_1$-$C_4$, halogène, carboxy et sulfo ; et Z possède la signification donnée à la revendication 1,

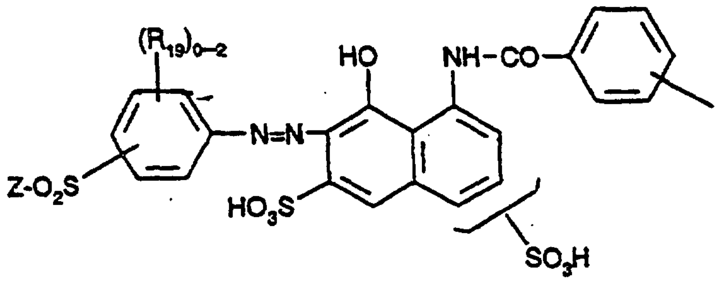

(8m),

où $(R_{19})_{0-2}$ représente 0 à 2 substituants identiques ou différents pris dans le groupe comportant alkyle en $C_1$-$C_4$, alkoxy en $C_1$-$C_4$, halogène, carboxy et sulfo ; et Z possède la signification donnée à la revendication 1,

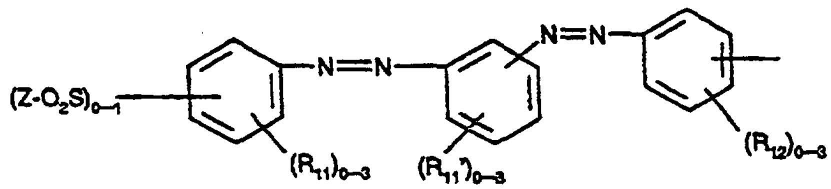

(8n)

ou

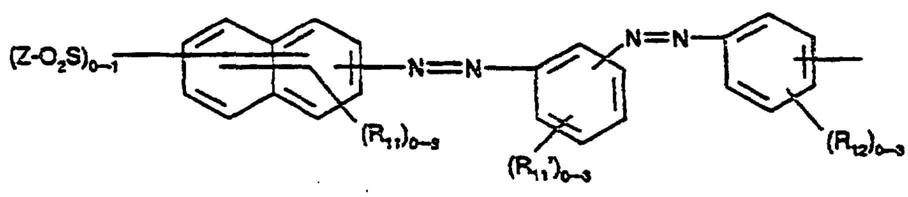

(8o)

ou

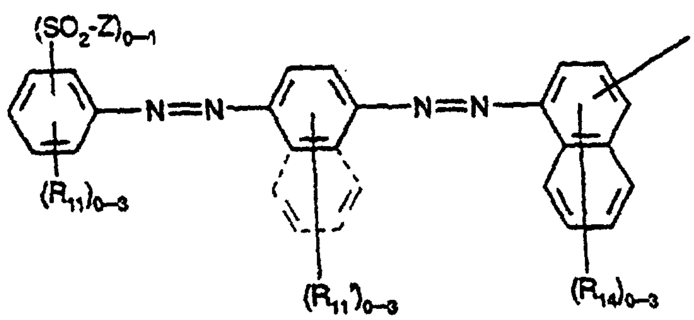

(8p)

ou

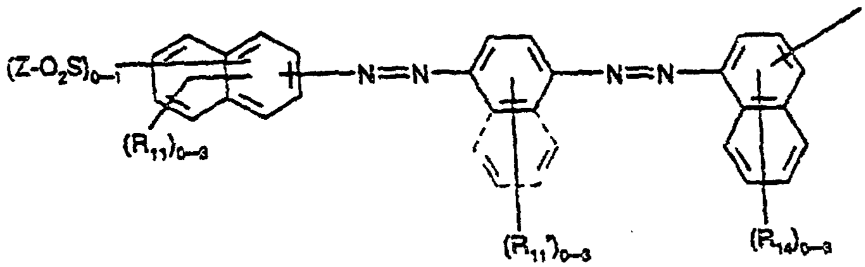

(8q),

où $(R_{11})_{0-3}$, $(R_{12})_{0-3}$, $(R_{14})_{0-3}$ et Z possèdent chacun la signification donnée ci-dessus et $(R_{11})_{0-3}$ représente 0 à 3 substituants identiques ou différents pris dans le groupe comportant alkyle en $C_1$-$C_4$, alkoxy en $C_1$-$C_4$, halogène, carboxy ou sulfo,

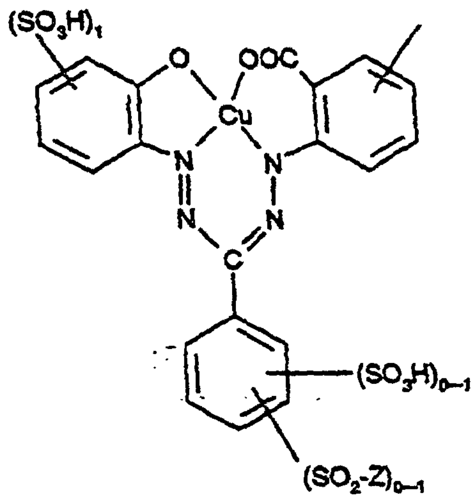

(8r)

ou

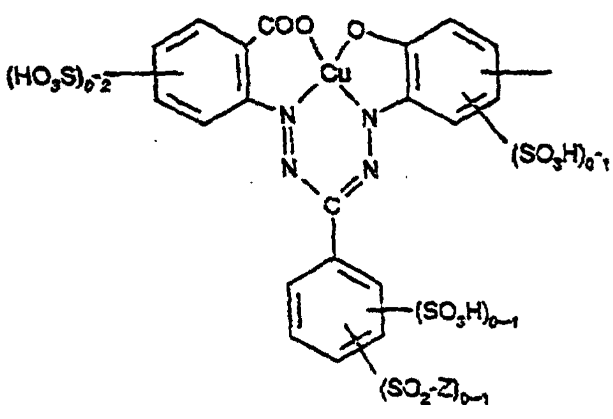

(8s)

où Z possède la signification donnée ci-dessus et les noyaux benzèniques ne portent pas d'autres substituants ou sont substitués davantage par des substituants alkyle en $C_1$-$C_4$, alkoxy en $C_1$-$C_4$, (alkyl en $C_1$-$C_4$)sulfonyle, halogène ou carboxy,

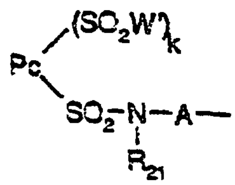

(9),

où Pc représente le reste d'une phtalocyanine métallique, en particulier le reste d'un phtalocyanine de cuivre ou de nickel ; W' représente des groupes -OH et/ou $-NR_{20}R_{20}'$ ; $R_{20}$ et $R_{20}'$ représentent, indépendamment l'un de l'autre, un atome d'hydrogène ou un groupe alkyle en $C_1$-$C_4$ éventuellement substitué par des substituants hydroxy ou sulfo ; $R_{21}$ représente un atome d'hydrogène ou un groupe alkyle en $C_1$-$C_4$ ; A représente un reste phénylène éventuellement substitué par des substituants alkyle en $C_1$-$C_4$, halogène, carboxy ou sulfo ou un reste alkylène en $C_2$-$C_6$ ; et k va de 1 à 3,

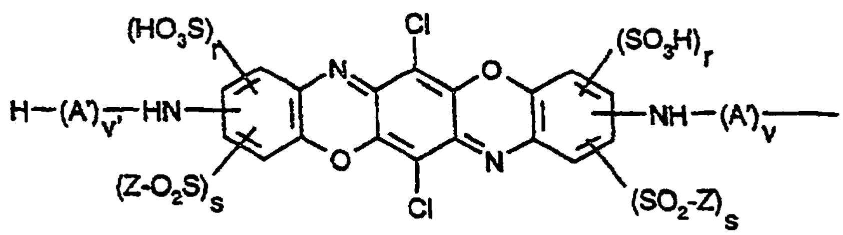

(10),

où A' représente un reste phénylène éventuellement substitué par des substituants alkyle en $C_1$-$C_4$, halogène, carboxy ou sulfo ou un reste alkylène en $C_2$-$C_6$, r, s, v et v' valent chacun, indépendamment l'un de l'autre, 0 ou 1 et Z possède la signification donnée auparavant, ou

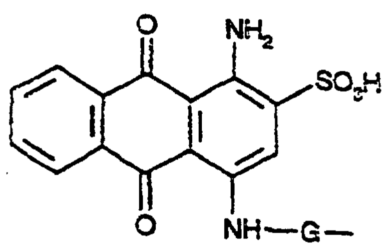

(11),

où G représente un reste phénylène non substitué ou substitué par des substituants alkyle en $C_1$-$C_4$, alkoxy en $C_1$-$C_4$, halogène, carboxy ou sulfo ou un reste cyclohexylène, phénylèneméthylène ou alkylène en $C_2$-$C_6$.

**9.** Colorants réactifs selon la revendication 8, **caractérisés en ce que** $A_1$ représente un reste de formules (8a) à (8q) ou un reste de formule (11).

**10.** Colorants réactifs selon l'une des revendications 1 à 9, **caractérisés en ce que** l'un des restes $R_2$ et $R_3$ représente un groupe alkyle en $C_1$-$C_4$ substitué par des substituants hydroxy, sulfo, sulfato, cyano ou carboxy, et l'autre des restes $R_2$ et $R_3$ représente un atome d'hydrogène ou un groupe alkyle en $C_1$-$C_4$.

**11.** Colorants réactifs selon l'une des revendications 8 et 9, **caractérisés en ce que**

$R_1$, $R_2$, $R_3$, $R_4$, $R_5$ et $R_6$ représentent des atomes d'hydrogène,
$X_1$ et $X_2$ représentent un atome de chlore ou notamment de fluor,
$B_1$ représente un reste de formule $-CH_2-CH(R_7)-$ ou $-(R_7)-CH-CH_2-$, où $R_7$ représente un groupe alkyle en $C_1$-$C_4$,
alk représente un reste alkylène en $C_2$-$C_3$,
Z représente un groupe vinyle ou un reste de formule $-CH_2-CH_2-OSO_3H$, et
$D_1$ représente un groupe phényle ou naphtyle non substitué ou substitué par des substituants alkyle en $C_1$-

$C_4$, alkoxy en $C_1$-$C_4$, (alcanoyl en $C_2$-$C_4$)amino, sulfo, halogène, carboxy ou un reste réactif sur la fibre.

**12.** Procédé pour la préparation de colorants réactifs selon la revendication 1, **caractérisés en ce qu'**on condense un composé de formule

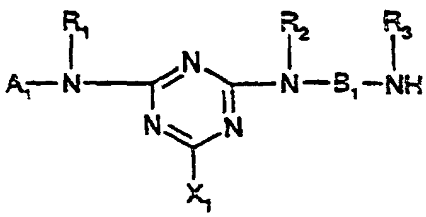

(12a)

sur un composé de formule

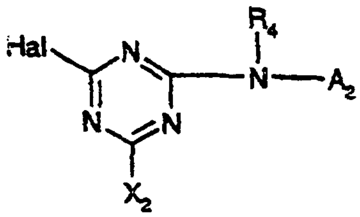

(13a),

ou un composé de formule

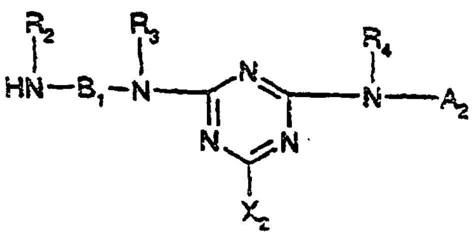

(12b)

sur un composé de formule

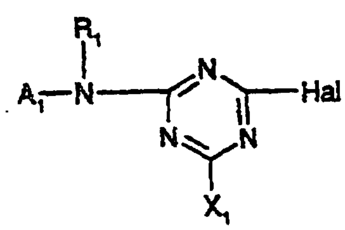

(13b)

où Hal représente un atome d'halogène et $A_1$, $A_2$, $B_1$, $X_1$, $X_2$, $R_1$, $R_2$, $R_3$ et $R_4$, possèdent les significations données à la revendication (1).

**13.** Utilisation des colorants réactifs selon l'une des revendications 1 à 11 ou obtenus selon la revendication 12 pour la teinture ou l'impression de matières fibreuses hydroxylées ou azotées.